# EUROPÄISCHE PATENTSCHRIFT

(11) **EP 1 226 195 B1**
(45) Veröffentlichungstag und Bekanntmachung des Hinweises auf die Patenterteilung: **17.05.2006**
(21) Anmeldenummer: 00971342.1
(22) Anmeldetag: 09.10.2000
(51) Int. Cl.: C08F 290/06, C08G 18/67, C08G 18/08, C09D 151/08

(54) **VERFAHREN ZUR HERSTELLUNG FARB- UND/ODER EFFEKTGEBENDER MEHRSCHICHTLACKIERUNGEN UNTER VERWENDUNG SELBSTVERNETZENDER PFROPFMISCHPOLYMERISATE VON POLYURETHANEN**
METHOD FOR PRODUCING CHROMOPHORE AND/OR EFFECT GIVING MULTILAYER LACQUERS USING SELF CROSS-LINKING GRAFT COPOLYMERS OF POLYURETHANE
PROCEDE DE REALISATION DE REVETEMENTS MULTICOUCHES COLORES ET/OU PRODUISANT UN EFFET AU MOYEN DE POLYMERISATS MIXTES GREFFES AUTORETICULANTS DE POLYURETHANES

(30) Priorität: 05.11.1999 DE 19953203
(43) Veröffentlichungstag der Anmeldung: 31.07.2002
(73) Patentinhaber: BASF Coatings AG, 48165 Münster (DE)
(72) Erfinder: SCHWARTE, Stephan, 48282 Emsdetten (DE); WEGNER, Egon, 97209 Veitshöchheim (DE); ANGERMÜLLER, Harald, 97078 Würzburg (DE)
(74) Vertreter: Fitzner, Uwe
(86) Internationale Anmeldenummer: PCT/EP2000/009850
(87) Internationale Veröffentlichungsnummer: WO 2001/032729

(56) Entgegenhaltungen:
- EP-A- 0 331 409
- EP-A- 0 919 579
- WO-A-99/10439
- DATABASE WPI Section Ch, Week 199914 Derwent Publications Ltd., London, GB; Class A23, AN 1999-162199 XP002157676 & JP 11 020107 A (TEIJIN LTD), 26. Januar 1999 (1999-01-26)

## Beschreibung

Die vorliegende Erfindung betrifft ein neues Verfahren zur Herstellung farb- und/oder effektgebender Mehrschichtlackierungen unter Verwendung selbstvernetzender Pfropfmischpolymerisate von Polyurethanen. Des weiteren betrifft die vorliegende Erfindung selbstvernetzende Polyurethane und ihre neuen selbstvernetzenden Pfropfmischpolymerisate. Außerdem betrifft die vorliegende Erfindung die Verwendung der neuen selbstvernetzenden Pfropfmischpolymerisate zur Herstellung von selbstvernetzenden Beschichtungsstoffen, Klebstoffen und Dichtungsmassen.

Im Rahmen der vorliegenden Erfindung bezeichnet der Begriff "selbstvemetzend" die Eigenschaft eines Bindemittels (zu dem Begriff vgl. Römpp Lexikon Lacke und Druckfarben, Georg Thieme Verlag, Stuttgart, New York, 1998, »Bindemittel«, Seiten 73 und 74), mit sich selbst Vernetzungsreaktionen einzugehen. Voraussetzung hierfür ist, das in den Bindemitteln bereits beide Arten von komplementären reaktiven funktionellen Gruppen enthalten sind, die für eine Vernetzung notwendig sind. Als fremdvemetzend werden dagegen solche Beschichtungsstoffe, Klebstoffe und Dichtungsmassen bezeichnet, worin die eine Art der komplementären reaktiven fimktionellen Gruppen in dem Bindemittel, und die andere Art in einem Harter oder Vernetzungsmittel vorliegen. Ergänzend, wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Aus der deutschen Patentanmeldung DE-A-196 45 761 sind hydrophile selbstvernetzende Polyurethane bekannt, die olefinisch ungesättigte Gruppen und endständige blockierte Isocyanatgruppen enthalten. Die Blockierungsmittel werden indes hierin nicht näher spezifiziert. Diese bekannten hydrophilen selbstvernetzenden Polyurethane werden zur Herstellung von Pfropfmischpolymerisaten nach der Emulsionspolymerisationsmethode verwendet. Die resultierenden Dispersionen der Pfropfmischpolymerisate werden zur Herstellung von Wasserbasislacken und Klebstoffen verwendet. Aus den Beispielen gehen jedoch keine selbstvernetzende, sondern nur fremdvernetzende Polyurethane und ihre Pfropfmischpolymerisate hervor. Ebensowenig wird die Herstellung farb- und/oder effektgebender Mehrschichtlackierungen nach dem Naß-in-naß-Verfahren, bei dem Basislackschichten mit Klarlackschichten überschichtet werden, wonach man beide Schichten gemeinsam härtet, in der Patentanmeldung angesprochen.

Aus dem deutschen Patent DE-C-197 22 862 ist ein fremdvemetzendes Pfropfmischpolymerisat bekannt, das erhältlich ist, indem man in einer Dispersion eines olefinisch ungesättigten, hydrophile funktionelle Gruppen aufweisenden Polyurethans mit im statistischen Mittel 0,05 bis 1,1 polymerisierbaren seitenständigen und/oder endständigen Doppelbindungen pro Molekül olefinisch ungesättigte Monomere polymerisiert.

Die bekannten fremdvernetzenden Pfropfmischpolymerisate der DE-C-197 22 862 liegen als Primärdispersionen vor und sind sehr gut für die Herstellung wäßriger fremdvernetzender Beschichtungsstoffe, insbesondere Wasserbasislacke, geeignet. Die fremdvernetzenden Wasserbasislacke können mit Vorteil für die Herstellung farb- und/oder effektgebender Mehrschichtlackierungen nach dem Naß-in-naß-Verfahren verwendet werden.

Für die Vernetzung dieser bekannten Wasserbasislacke werden hydrophobe Vernetzungsmittel verwendet, die über Colösemittel oder Emulgatoren in die wäßrigen Beschichtungsstoffe eingearbeitet werden müssen. Wegen ihrer hydrophoben Eigenschaften und der daraus resultierenden vergleichsweise schlechten Verteilung in dem wäßrigen Beschichtungsstoff müssen größere Mengen an Vemetzungsmitteln eingearbeitet werden, als für eine ausreichende Vernetzung und Haftung der resultierenden Beschichtung, insbesondere des Wasserbasislacks, an und für sich notwendig wären. Außerdem erhöhen die Colösemittel wieder die Emission organischer Stoffe bei der Trocknung und Härtung, was ja durch die Verwendung wäßriger Beschichtungsstoffe gerade verringert oder ganz vermieden werden sollte. Des weiteren beeinflussen Reste von Vernetzungsmitteln, Emulgatoren und Colösemittel das sogenannte Flash-off-Verhalten der bekannten Wasserbasislackschichten in nachteiliger Weise, was sich durch eine Erniedrigung der Schichtdicke, ab der Rißbildung (mud cracking) und Kocher auftreten, bemerkbar macht. Die Verwendung hydrophiler Vernetzungsmittel könnte zwar die mit der Verwendung der Colösemittel und Emulgatoren verbundenen Nachteile in gewissem Umfang beheben, indes sinken dann die Schwitzwasser- und Witterungsbeständigkeit der entsprechenden Beschichtungen.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Die vorstehend geschilderten Probleme werden noch verschärft, wenn die bekannten Wasserbasislacke zusammen mit Pulverslurry-Klarlacken zur Herstellung farb- und/oder effektgebender Mehrschichtlackierungen verwendet werden.

Aus der deutschen Patentanmeldung mit DE-A-197 53 222 ist eine Primärdispersion aus einem selbstvernetzenden Pfropfmischpolymerisat bekannt, das durch radikalische Emulsionspolymerisation von Vinylmonomeren, von denen mindestens eines eine Acetoacetoxygruppe trägt, in der Gegenwart eines hydrophilen (potentiell) anionische Gruppen enthaltenden gesättigten Polyurethans herstellbar ist. Das resultierende Pfropfmischpolymerisat wird durch die Zugabe von Polyaminen wie Diethylentriamin, die ionisch an das Bindemittel, d. h. das Pfropfinischpolymerisat, gebunden werden, selbstvernetzend. Die Vernetzung läuft bereits bei Raumtemperatur unter Enaminbildung ab, was die Lagerstabilität stark beeinträchtigt. Die bekannte Primärdispersion wird für die Herstellung von Klarlacken verwendet. Ob sie auch für die Herstellung von Wasserbasislacken geeignet ist, läßt sich der DE-A-197 53 222 nicht entnehmen. Der hohe Gehalt an Polyaminen läßt befürchten, daß diese bekannten Primärdispersionen bei Temperaturen, wie sie üblicherweise bei der Herstellung farb- und/oder effektgebender Mehrschichtlackierungen für Automobilkarosserien angewandt werden, vergilben.

Wegen der Verwendung gesättigter Polyurethane treten hier außerdem Probleme, die mit einer zu geringen Pfropfaktivität verknüpft sind, auf. So kann ein großer Teil der aufzupfropfenden Monomere separate Homo- und/oder Copolymerisate neben dem Poylurethan bilden, die die anwendungstechnischen Eigenschaften der Pfropfmischpolymerisate und der hiermit hergestellten Beschichtungsstoffe, Klebstoffe und Dichtungsmassen beeinträchtigen können.

Aufgabe der vorliegenden Erfindung ist es ein neues Naß-in-naß-Verfahren zur Herstellung farb- und/oder effektgebender Mehrschichtlackierungen auf grundierten oder ungrundierten Substraten zu finden, das die Nachteile des Standes der Technik nicht mehr länger aufweist, sondern das auch bei Verwendung von Pulverslurry-Klarlacken Mehrschichtlackierungen liefert, die keine Rißbildung (mud cracking), Kocher oder Nadelstiche aufweisen. Darüber hinaus sollen die resultierenden Mehrschichtlackierungen einen hervorragenden optischen Gesamteindruck sowie eine hohe Chemikalien-, Vergilbungs- und Witterungsbeständigkeit aufweisea Nicht zuletzt sollen sie keine Enthaftung der Schichten nach dem Wasserstrahltest zeigen. Alle diese Vorteile sollen erzielt werden können, ohne daß eine Erhöhung der Emission organischer Verbindungen in Kauf genommen werden muß.

Aufgabe der vorliegenden Erfindung ist es außerdem, selbstvernetzende olefinisch ungesättigte Polyurethane bereitzustellen, die sich gezielt und in einfacher Weise ohne die Gefahr der Produktschädigung herstellen lassen und die hervonagende Pfropfgrundlagen für olefinisch ungesättigte Monomere darstellen.

Noch eine weitere Aufgabe der vorliegenden Erfindung ist es, neue selbstvernetzende Pfropfmischpolymerisate, insbesondere in der Form von Primärdispersionen, zu finden, die sich in einfacher Weise gezielt und ohne die Gefahr der Produktschädigung herstellen lassen.

Noch eine weitere Aufgabe der vorliegenden Erfindung ist es, neue wäßrige und nicht wäßrige selbstvernetzende Beschichtungsstoffe, Klebstoffe und Dichtungsmassen auf Polyurethanbasis mit sehr guten anwendungstechnischen Eigenschaften bereitzustellen. Insbesoridere sollen neue selbstvernetzeade Beschichtungsstoffe, insbesondere neue wäßrige selbstvernetzende Beschichtungsstoffe, speziell neue selbstvernetzende Wasserbasislacke, bereitgestellt werden, die die Nachteile des Standes der Technik nicht mehr länger aufweisen, sondern sich hervorragend für die Applikation nach dem Naß-in-Naß-Verfahren eignen. Hierbei soll es auch bei der Verwendung von Pulverklarlack-Slurries nicht zu einer Rißbildung (mud cracking), oder Kochern oder Nadelstichen kommen. Dabei sollen die neuen Beschichtungsstoffe eine sehr gute Lagerstabilität und hervorragende Applikationseigenschaften, wie einen sehr guten Verlauf und eine sehr geringe Läuferneigung auch bei hohen Schichtdicken, zeigen. Die resultierenden Mehrschichtlackierungen sollen einen hervorragenden optischen Gesamteindruck sowie eine hohe Chemikalien-, Vergilbungs- und Witterungsbeständigkeit aufweisen. Außerdem soll keine Enthaftung der Schichten nach dem Wasserstrahltest auftreten. Alle diese Vorteile sollen erzielt werden können, ohne daß eine Erhöhung der Emission organischer Verbindungen in Kauf genommen werden muß.

Demgemäß wurde das neue Verfahren zur Herstellung farb- und/oder effektgebender Mehrschichtlackierungen auf grundierten oder ungrundierten Substraten gefunden, das die folgenden Verfahrensschritte umfaßt:
(I) Herstellen einer Basislackschicht durch Applikation eines Wasserbasislacks auf
   (I.1) das Substrat,
   (I.2) eine thermisch gehärtete Füllerlackierung oder
   (I.3) eine getrocknete Füllerlackschicht,
(II) Trocknen der Basislackschicht,
(III) Herstellen einer Klarlackschicht durch Applikation eines Pulverslurry-Klarlacks auf die Basislackschicht und
(IV) gemeinsame Härtung der Basislackschicht (II) und der Klarlackschicht (III) oder der Füllerlackschicht (1.3), der Basislackschicht (II) und der Klarlackschicht (III), wodurch die Basislackierung und die Klarlackierung sowie gegebenenfalls die Füllerlackierung resultieren (Naß-in-naß-Verfahren);
wobei man einen Wasserbasislack verwendet, der mindestens ein Pfropfmischpolymerisat, enthaltend
(A) mindestens ein (Meth)Acrylatcopolymerisat und
(B) mindestens ein Polyurethan
und herstellbar, indem man
(1) mindestens ein hydrophiles oder hydrophobes selbstvernetzendes Polyurethan (B) mit im statistischen Mittel mindestens einer endständigen und/oder mindestens einer seitenständigen olefinisch ungesättigten Gruppe und mindestens einer blockierten Isocyanatgruppe pro Molekül in einem wäßrigen Medium dispergiert, wonach man
(2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert;
enthält.

Im folgenden wird das neue Verfahren zur Herstellung farb- und/oder effektgebender Mehrschichtlackierungen auf grundierten oder ungrundierten Substraten der Kürze halber als "erfindungsgemäßes Verfahren" bezeichnet.

Nicht zuletzt wurde das neue Pfropfmischpolymerisat gefunden, das
(A) mindestens ein (Meth)Acrylatcopolymerisat und
(B) mindestens ein Polyurethan
enthält und das herstellbar ist, indem man
(1) mindestens ein hydrophiles oder hydrophobes selbstvernetzendes Polyurethan (B) mit im statistischen Mittel mindestens einer seitenständigen und/oder mindestens einer endständigen olefinisch ungesättigten Gruppe und mindestens einer seitenständigen blockierten Isocyanatgruppe pro Molekül in einem wäßrigen Medium dispergiert, wonach man
(2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert.

Im folgenden wird das neue Pfropfmischpolymerisat als "erfindungsgemäßes Pfropfmischpolymerisat" bezeichnet.

Des weiteren wurden die neuen Klebstoffe, Dichtungsmassen und Beschichtungsstoffe, vor allem Lacke, insbesondere wäßrige Lacke, speziell Wasserbasislacke, gefunden, die mindestens ein erfindungsgemäßes Pfropfinischpolymerisat enthalten und im folgenden als erfindungsgemäße Klebstoffe, Dichtungsmassen und Beschichtungsstoffe bezeichnet werden.

Weitere erfindungsgemäße Gegenstände gehen aus der Beschreibung hervor.

Im Hinblick auf den Stand der Technik war es überraschend und für den Fachmann nicht vorhersehbar, daß die komplexe Aufgabe, die der vorliegenden Erfindung zugrunde lag, mit Hilfe des erfindungsgemäßen Verfahrens, der erfindungsgemäßen Pfropfmischpolymerisate gelöst werden konnte, wobei der Kern der Erfindung überraschenderweise in der Verwendung selbstvernetzender Polyurethane und ihrer Pfropfarlschpolymcrisate lag. Insbesondere überraschte, daß die Polyurethane (B) und die erfindungsgemäßen Pfropfmischpolymerisate in einfacher Weise gezielt hergestellt werden können, ohne daß es hierbei zu einer Schädigung der erfindungsgemäßen Produkte kommt. Des weiteren überraschte die außerordentlich breite Verwendbarkeit des erfindungsgemäßen Verfahrens und der erfindungsgemäßen Pfropfmischpolymerisate. Nicht zuletzt überraschte die hohe Lagerstabilität der erfindungsgemäßen Pfropfmischpolymerisate auch unter klimatischen Extrembedingungen wie Tropenklima oder besonders heiße Sommertage. Völlig unvorhersehbar war, daß insbesondere die erfindungsgemäßen Pfropfmischpolymerisate Wasserbasislacke liefern, die mit Pulverklarlack-Slurries nach dem Naß-in-naß-Verfahren zu hervorragenden farb- und/oder effektgebenden Mehrschichtlackierungen verarbeitet werden können, ohne daß es zu einer Rißbildung (mud cracking), Kochern oder Nadelstichen oder zur Enthaltung der Schichten nach dem Wasserstrahltest kommt.

Das erfindungsgemäße Verfahren dient der Herstellung farb- und/oder effektgebender Mehrschichtlackierungen auf grundierten oder ungrundierten Substraten.

Als Substrate kommen alle zu lackierenden Oberflächen, die durch eine Härtung der hierauf befindlichen Lackierungen unter Anwendung von Hitze nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist das erfindungsgemäße Verfahren auch für Anwendungen außerhalb der Automobulackierung geeignet Hierbei kommt es insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet es sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Verfahren können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Erfindungsgemäß wird in einem ersten Verfahrenschritt ein Wasserbasislack auf das Substrat, auf eine zuvor auf das Substrat applizierte und thermisch gehärtete Füllerlackierung oder auf eine zuvor auf das Substrat applizierte und getrocknete Füllerlackschicht appliziert, wodurch die Basislackschicht resultiert.

Die Applikation des Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack selbst, betrieben wird.

Selbstverständlich können diese Verfahren auch zur Applikation der Pulverslurry-Klarlacke sowie gegebenenfalls der Füller verwendet werden.

Erfindungsgemäß wird die Basislackschicht getrocknet, indes nicht vernetzt.

In einem weiteren Verfahrensschritt wird ein Pulverslurry-Klarlack auf die getrocknete Basislackschicht appliziert, wodurch die Klarlackschicht resultiert. Hierbei werden die vorstehend beschriebenen Verfahren zur Applikation angewandt.

Bekanntermaßen wird dieses Verfahren von der Fachwelt auch als Naß-in-naß-Verfahren bezeichnet.

Die Füllerlackschicht (sofern verwendet), Basislackschicht und Klarlackschicht werden gemeinsam thermisch gehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 60 bis 100 °C und insbesondere 80 bis 100 °C während einer Zeit von 1 min bis zu 2 h, besonders bevorzugt 2 min bis zu 1 h und insbesondere 3 min bis 45 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Im Falle der Klarlackierung kann die Härtung je nach verwendetem Pulverslurry-Klarlack auch mit aktinischer Strahlung oder thermisch und mit aktinischer Strahlung (Dual Cure) erfolgen. Als aktinische Strahlung kommt elektromagnetische Strahlung wie nahes Infrarotlicht (NIR), sichtbares Licht, UV-Strahlung oder Röntgenstrahlung und/oder Korpuskularstrahlung wie Elektronenstrahlung in Betracht. Indes kann die Bestrahlung mit aktinischer Strahlung auch der Nachbehandlung der thermisch gehärteten Klarlackierung dienen.

Darüber hinaus kann die Klarlackierung noch zusätzlich mit mindestens einer weiteren Klarlackierung, beispielsweise einer organisch modifizierten Keramikschicht, beschichtet sein, wodurch die Kratzfestigkeit der farb- und/oder effektgebenden Mehrschichtlackierung signifikant verbessert werden kann.

Im allgmeinen werden die Füllerlackschicht (sofern verwendet), Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 10 bis 120, besonders bevorzugt 10 bis 100 und insbesondere 10 bis 90 µm, im Falle der Basislackierung liegt sie bei 5 bis 50, vorzugsweise 5 bis 40, besonders bevorzugt 5 bis 30 und insbesondere 10 bis 25 µm, und im Falle der Klarlackierung liegt sie bei 10 bis 100, vorzugsweise 15 bis 80, besonders bevorzugt 20 bis 70 und insbesondere 25 bis 60 µm.

Die nach dem erfindungsgemäßen Verfahren hergestellten farb- und/oder effektgebenden Mehrschichtlackierungen weisen einen unterschiedlichen Aufbau auf.

In einer ersten bevorzugten Variante der Mehrschichtlackierung liegen
(1) die farb- und/oder effektgebende Basislackierung und
(2) die Klarlackierung
in der angegebenen Reihenfolge übereinander. Diese bevorzugte Variante wird insbesondere bei der Kunststofflackierung angewandt.

In der zweiten bevorzugten Variante der Mehrschichtlackierung liegen
(1) eine mechanische Energie absorbierende Füllerlackierung,
(2) die farb- und/oder effektgebende Basislackierung und
(3) die Klarlackierung
in der angegebenen Reihenfolge übereinander. Diese Variante wird insbesondere bei der Automobillackierung angewandt.

Für das erfindungsgemäße Verfahren ist es wesentlich, daß man hierbei einen Wasserbasislack verwendet, der mindestens ein spezielles Pfropfmischpolymerisat enthält.

Das erfindungsgemäß zu verwendende Pfropfmischpolymerisat enthält mindestens ein (Meth)Acrylatcopolymerisat (A) und mindestens ein hiermit gepfropftes Polyurethan (B).

Die erfindungsgemäß für die Herstellung der Pfropfmischpolymerisate zu verwendenden Polyurethane (B) sind im vorstehend genannten Sinne hydrophil oder hydrophob. Hinsichtlich ihrer Verwendung zur Herstellung der erfindungsgemäßen Pfropfmischpolymerisate bieten die hydrophilen erfindungsgemäßen Polyurethane (B) Vorteile und werden deshalb bevorzugt verwendet. Des weiteren sind die erfindungsgemäß zu verwendenden Polyurethane (B) im vorstehend genannten Sinne selbstvernetzend.

Sie enthalten im statistischen Mittel mindestens eine endständige und/oder mindestens eine seitenständige olefinisch ungesättigte Gruppe. D. h., sie enthalten mindestens eine endständige oder mindestens eine seitenständige olefinisch ungesättigte Gruppe oder sie enthalten mindestens eine endständige und mindestens eine seitenständige olefinisch ungesättigte Gruppe. Erfindungsgemäß ist die Verwendung seitenständiger olefinisch ungesättigter Gruppen von Vorteil. Von besonderem Vorteil ist die Verwendung von mindestens zwei, insbesondere mehr als zwei, olefinisch ungesättigten Gruppen pro Molekül.

Beispiele geeigneter olefinisch ungesättigter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Isoprenyl-, Isopropenyl-, Allyl- oder Butenylethergruppen oder Isoprenyl-, Isopropenyl-, Allyl- oder Butenylestergruppen, von denen (Meth)Acrylat- oder Allylethergruppen, insbesondere Allylethergruppen, von Vorteil sind und deshalb erfindungsgemäß besonders bevorzugt verwendet werden.

Zusätzlich zu diesen olefinisch ungesättigten Gruppen können noch Ethenylarylengruppen der allgemeinen Formel (I) verwendet werden:

**CH**_{**2**}**=C(CH**_{**3**}**)-C**_{**6**}**H**_{**4**}- (I),

worin -C₆H₄- einen 1,2-, 1,3- oder 1,4-Phenylenrest, insbesondere einen 1,3-Phenylenrest bedeutet.

Der weitere wesentliche Bestandteil des Polyurethans (B) ist im statistischen Mittel mindestens eine blockierte Isocyanatgruppe. Vorzugsweise werden mindestens zwei blockierte Isocyanatgruppen angewandt. Die blockierten Isocyanatgruppen resultieren aus der Umsetzung freier Isocyanatgruppen mit geeigneten Blockierungsmitteln. Beispiele geeigneter Blockierungsmittel sind die nachstehend beschriebenen.

Die blockierten Isocyanatgruppen sind hinsichtlich der Polymerhauptkette des Polyurethans (B) endständig und/oder seitenständig. Im Rahmen des erfindungsgemäßen Verfahrens können Polyurethane (B), die endständige oder seitenständige oder endständige und seitenständige blockierte Isocyanatgruppen enthalten, angewandt werden.

Bei den Polyurethanen (B), die seitenständige blockierte Isocyanatgruppen enthalten, handelt es sich um die erfindungsgemäßen Polyurethane.

Da in vielen Fällen die endständigen blockierten Isocyanatgruppen in vergleichsweise einfacher Weise erhältlich sind und dabei den erfindungsgemäßen technischen Zweck in vollem Umfang erfüllen, werden sie erfindungsgemäß bevorzugt verwendet.

Die hydrophilen Polyurethane (B) enthalten des weiteren hydrophile funktionelle Gruppen. Beispiele geeigneter hydrophiler funktioneller Gruppen sind die nachstehend beschriebenen, von denen Carbonsäuregruppen und/oder Carboxylatgruppen von besonderem Vorteil sind und deshalb erfindungsgemäß ganz besonders bevorzugt verwendet werden.

Das erfindungsgemäß für die Herstellung der Pfropfmischpolymerisate zu verwendende Polyurethan (B) ist bevorzugt erhältlich, indem man in einem ersten Verfahrensschritt ein Polyurethanpräpolymer (B1) herstellt.

Das Polyurethanpräpolymer (B1) ist linear, verzweigt oder kammartig, insbesondere aber linear, aufgebaut. Hierbei enthält das lineare Polyurethanpräpolymer (B1) im statistischen Mittel vorzugsweise zwei freie Isocyanatgruppen, insbesondere zwei endständige freie Isocyanatgruppen. Die verzweigten oder kammartig aufgebauten Polyurethanpräpolymere (B1) enthalten vorzugsweise mindestens zwei, insbesondere mehr als zwei freie Isocyanatgruppen, wobei endständige freie Isocyanatgruppen bevorzugt sind.

Wird das Polyurethanpräpolymer (B1) für die Herstellung der erfindungsgemäßen Polyurethane (B) verwendet, enthält es im statistischen Mittel mindestens eine, insbesondere mindestens zwei, seitenständige blockierte Isocyanatgruppen.

Methodisch gesehen weist die Herstellung der erfindungsgemäß zu verwendenden Polyurethanpräpolymere (B1) keine Besonderheiten auf, sondern erfolgt beispielsweise wie in den Patentschriften DE-C-197 22 862, DE-A-196 45 761, EP-A-0 522 419 oder EP-A-0 522 420 beschrieben, durch Umsetzung mindestens eines Polyisocyanats (B1.1), insbesondere eines Diisocyanats (B1.1), mit mindestens einem Polyol (B1.2), insbesondere einem Diol (B1.2), wobei die Isocyanatkomponente (B1.1) im molaren Überschuß angewandt wird, so daß endständige freie Isocyanatgruppen resultieren.

Vorzugsweise werden für die Herstellung der Polyurethanpräpolymere (B1) Diisocyanate (B1.1) sowie gegebenenfalls in untergeordneten Mengen Polyisocyanate (B1.1) zur Einführung von Verzweigungen verwendet. Im Rahmen der vorliegenden Erfindung sind unter untergeordneten Mengen Mengen zu verstehen, die kein Gelieren der Polyurethanpräpolymere (B1) bei ihrer Herstellung bewirken. Letzteres kann auch noch durch die Mitverwendung geringer Mengen an Monoisocyanaten verhindert werden.

Beispiele für geeignete Diisocyanate (B1.1) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendüsocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Toluylendüsocyanat, Xylylendüsocyanat, Bisphenylendiisocyanat, Naphthylendiisocyanat oder Diphenylmethandüsocyanat.

Beispiele geeigneter Polyisocyanate (B1.1) sind die Isocyanurate der vorstehend beschriebenen Diisocyanate.

Beispiele gut geeigneter Monoisocyanate sind Phenylisocyanat, Cyclohexylisocyanat, Stearylisocyanat oder Vinylisocyanat, Methacryloylisocyanat und/oder 1-(1-Isocyanato-1-methylethyl)-3-(1-methylethenyl)-benzol (TMI® der Firma CYTEC), durch die ein Teil der olefinisch ungesättigten Gruppen, insbesondere Ethenylarylengruppen der Formel I, in die Polyurethanpräpolymeren (B1) eingeführt werden kann.

Beispiele geeigneter Polyole (B1.2) sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandiearbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.-%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure oder Fettsäuren natürlich vorkommender Öle sowie Acrylsäure, Methacrylsäure, Ethacrylsäure oder Crotonsäure, durch die ein Teil der olefinisch ungesättigten Gruppen in das Polyurethanprepolymer (B1) eingeführt werden kann. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole (B1.2) einzuführen. Im Rahmen der vorliegenden Erfindung sind unter untergeordneten Mengen Mengen zu verstehen, die kein Gelieren der Polyesterpolyole (B1.2) bei ihrer Herstellung bewirken.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel II oder III: 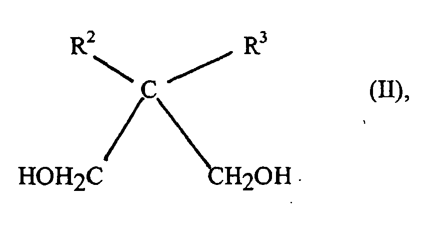 in der R² und R³ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R² und/oder R³ nicht Methyl sein darf; 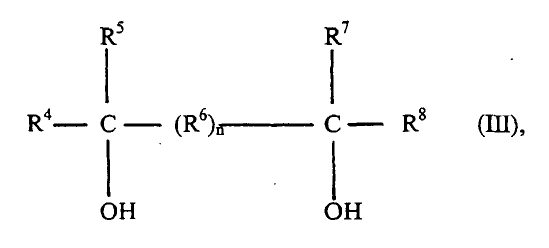 in der R⁴, R⁵, R⁷ und R⁸ jeweils gleiche oder verschiedene Reste darstellen und für einen Alkylrest mit 1 bis 6 C-Atomen, einen Cycloalkylrest oder einen Arylrest stehen und R⁶ einen Alkandiylrest mit 1 bis 6 C-Atomen, einen Arylenrest oder einen ungesättigten Alkendiylrest mit 1 bis 6 C-Atomen darstellt, und n entweder 0 oder 1 ist.

Als Diole II der allgemeinen Formel II sind alle Propandiole geeignet, bei denen entweder R² oder R³ oder R² und R³ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole III der allgemeinen Formel III können beispielsweise 2,5-Dimethylhexandiol-2,5, 2,5-Diethylhexandiol-2,5, 2-Ethyl-5-methylhexandiol-2,5, 2;4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als Diole (B1.2) für die Herstellung der Polyurethanpräpolymere (B1) eingesetzt werden.

Beispiele geeigneter Triole sind Trimethylolethan, Trimethylolpropan oder Glycerin, insbesondere Trimethylolpropan.

Die vorstehend genannten Triole können auch als Triole (B1.2) für die Herstellung der Polyurethanpräpolymere (B1) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Phenol oder Allylalkohol, durch den ein Teil der olefinisch ungesättigten Gruppen in das Polyurethanpräpolymer (B1) eingeführt werden kann.

Die Herstellung der Polyesterpolyole (B1.2) kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole (B1.2) sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁹)ₘ- CH₂-O-)- aus. Hierbei ist der Index m bevorzugt 4 bis 6 und der Substitutent R⁹ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole (B1.2) wird das unsubstituierte ### -Caprolacton, bei dem m den Wert 4 hat und alle R⁹-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole (B1.2) sind Polyetherpolyole, insbesondere mit einem zahlenmittleren Molekulargewicht von 400 bis 5000, insbesondere von 400 bis 3000. Gut geeignete Polyetherdiole (B1.2) sind z.B. Polyetherdiole der allgemeinen Formel H-(-O-(CHR¹⁰)ₒ-)ₚOH, wobei der Substituent R¹⁰ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole (B1.2) wie Poly(oxyethylen)glykole, Poly(oxypropylen)glykole und Poly(oxybutylen)glykole genannt.

Durch die Polyetherdiole (B1.2) können die nichtionischen hydrophilen funktionellen Gruppen (b3) oder ein Teil hiervon in die Hauptkette(n) der Polyurethanpräpolymeren (B1) eingeführt werden.

Die aus der Umsetzung der Polyisocyanate (B1.1) und der Polyole (B1.2) resultierenden, im wesentlichen hydrophoben Polyurethanpräpolymeren (B1) mit mindestens zwei endständigen freien Isocyanatgruppen können mit mindestens einem der nachstehend beschriebenen Blockierungsmittel (B1.7) und mit mindestens einer Verbindung mit einer olefinisch ungesättigten Gruppe und einer isocyanatreaktiven funktionellen Gruppe, beispielsweise Allylalkohol oder 2-Hydroxyethylacrylat, umgesetzt werden, wodurch ein hydrophobes selbstvernetzendes Polyurethan (B) mit im statistischen Mittel einer endständigen olefinisch ungesättigten Gruppe und einer endständigen blockierten Isocyanatgruppe pro Molekül resultiert. Bereits dieses Polyurethan (B) kann im Rahmen des erfindungsgemäßen Verfahrens verwendet werden.

Erfindungsgemäß ist es indes von Vorteil für die Herstellung der Polyurethanpräpolymeren (B1) und der Polyurethane (B) noch weitere Bausteine zu verwenden.

Werden die Polyurethanpräpolymeren (B1) für die Herstellung der erfindungsgemäßen Polyurethane (B) und Pfropfmischpolymerisate verwendet, wird zu ihrer Herstellung zum Zwecke der Einführung der seitenständigen blockierten Isocyanatgruppen erfindungsgemäß noch mindestens eine Verbindung (B1.3) verwendet, die mindestens eine, insbesondere eine, blockierte Isocyanatgruppe und mindestens zwei, insbesondere zwei, isocyanatreaktive funktionelle Gruppen enthält. Beispiele geeigneter isocyanatreaktiver Gruppen sind -SH, -NH₂, >NH, -OH, -O-(CO)-NH-(CO)-NH₂ oder -O-(CO)-NH₂, von denen die primären und sekundären Aminogruppen und die Hydroxylgruppe von Vorteil und die Hydroxylgruppen von besonderem Vorteil sind.

Vorzugsweise werden diese Verbindungen (B1.3) hergestellt, indem man in einem ersten Verfahrensschritt mindestens ein vorstehend beschriebenes Polyisocyanat (B1.1), insbesondere ein Diisocyanat (B1.1), mit mindestens einem monofunktionellen Blockierungsmittel (B1.7) in einem Molverhältnis umsetzt, daß in dem resultierenden Zwischenprodukt im statistischen Mittel mindestens eine, insbesondere eine, freie Isocyanatgruppe verbleibt.

Beispiele geeigneter Blockierungsmittel (B1.7) sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propioiactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylälkohol, t-Amylalkohol, Laurylalkohol, Ethylenglykolinonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime oder Ketoxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, Imidazole oder Triazole; sowie
xvii) Gemische dieser Blockierungsmittel wie Dimethylpyrazol und Triazole, Malonester und Acetessigsäureester oder Dimethylpyrazol und Succinimid.

Von diesen Blockierungsmitteln (B1.7) bieten die Oxime und Ketoxime xiii), insbesondere die Ketoxime xiii), speziell Methylethylketoxim, sowie die substituierten Pyrazol xvi), insbesondere Dimethylpyrazol, besondere Vorteile und werden deshalb besonders bevorzugt verwendet.

Das Zwischenprodukt wird anschließend in einem zweiten Verfahrensschritt mit mindestens einer Verbindung umgesetzt, die mindestens drei, insbesondere drei, isocyanatreaktive funktionelle Gruppen im Molekül enthält. Hierbei wird das Molverhältnis von Zwischenprodukt zu trifunktioneller Verbindung so gewählt, daß vorzugsweise zwei isocyanatreaktive funktionelle Gruppen in der resultierenden Verbindung (B1.3) verbleiben.

Beispiele geeigneter Verbindungen, die mindestens drei isocyanatreaktive funktionelle Gruppen enthalten, sind die vorstehend beschriebenen Triole (B1.2) oder die nachstehend beschriebenen Polyamine oder Aminoalkohole (B1.8). Außerdem kommen noch höherfunktionelle Polyole wie Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit in Betracht.

Die Herstellung der Verbindungen (B1.3) weist keine methodischen Besonderheiten auf, sondern erfolgt durch die Umsetzung der vorstehend beschriebenen Ausgangsprodukte in einem inerten organischen Medium, vorzugsweise in polaren organischen Lösemitteln wie Ketonen, insbesondere Methylethylketon, oder Amiden, insbesondere N-Methylpyrrolidon, die keine funktionellen Gruppen aufweisen, die mit Isocyanatgruppen reagieren. Wesentlich ist, daß die Umsetzung so lange erfolgt, bis keine freien Isocyanatgruppen im Reaktionsgemisch mehr nachweisbar sind.

Durch die Verbindungen (B1.3) resultiert auch noch ein Aufbau des Molekulargewichts der Polyurethanpräpolymeren (B1).

Für die Herstellung der Polyurethanpräpolymeren (B1), die der Herstellung der erfindungsgemäß bevorzugten Polyurethanen (B) dienen, wird des weiteren mindestens eine Verbindung (B1.4) mit mindestens einer olefinisch ungesättigten Gruppe und mindestens zwei isocyanatreaktiven funktionellen Gruppen verwendet.

Beispiele geeigneter isocyanatreaktiver funktioneller Gruppen sind die vorstehend beschriebenen. Beispiele geeigneter olefinisch ungesättigter Gruppen werden ebenfalls vorstehend beschrieben.

In einer bevorzugten Variante wird die Verbindung (B1.4) aus einem der vorstehend beschriebenen di- oder trifunktionellen Polyisocyanate (B1.1) und einer Verbindung, die mindestens eine isocyanatreaktive funktionelle Gruppe und mindestens eine olefinisch ungesättigte Gruppe enthält, hergestellt. Beispiele geeigneter Verbindungen dieser Art sind die nachstehend beschriebenen Monomeren (a1). Die Verbindungen werden mit den Polyisocyanaten (B1.1) in einem Molverhältnis umgesetzt, daß das Zwischenpodukt noch mindestens eine, insbesondere eine, freie Isocyanatgruppe aufweist. In einem weiteren Verfahrensschritt wird das Zwischenpodukt mit einer Verbindung, die mindestens drei isocyanatreaktive funktionelle Gruppen enthält, in einem Molverhältnis umgesetzt, daß mindestens zwei, insbesondere zwei, isocyanatreaktive funktionelle Gruppen in der resultierenden Verbindungen (B1.4) verbleiben.

Beispiele geeigneter Verbindungen mit mindestens drei isocyanatreaktiven funktionellen Gruppen im Molekül sind die vorstehend bei der Herstellung der Verbindung (B1.3) beschriebenen. Hinsichtlich der Herstellung der Verbindungen (B1.4) gilt das bei den Verbindungen (B1.3) Gesagte sinngemäß.

Weitere Beispiele bevorzugter Verbindungen (B1.4) sind
- die Monoester der nachstehend beschriebenen, mindestens eine Säuregruppe pro Molekül enthaltenden, olefinisch ungesättigten Monomeren (a2) mit den vorstehend beschriebenen Triolen (B1.2),
- die Monoether der nachstehend beschriebenen ungesättigten Alkohole (a1) mit den vorstehend beschriebenen Triolen (B 1.2),
- die Mono- oder Diester der nachstehend beschriebenen, mindestens eine Säuregruppe pro Molekül enthaltenden, olefinisch ungesättigten Monomeren (a2) mit den vorstehend beschriebenen Tetrolen,
- die Mono- oder Diether der nachstehend beschriebenen ungesättigten Alkohole (a1) mit den vorstehend beschriebenen Tetrolen,
- die Mono-, Di- oder Triester der nachstehend beschriebenen, mindestens eine Säuregruppe pro Molekül enthaltenden, olefinisch ungesättigten Monomeren (a2) mit den vorstehend beschriebenen Pentiten,
- die Mono-, Di- oder Triether der nachstehend beschriebenen ungesättigten Alkohole (a1) mit den vorstehend beschriebenen Pentiten,
- die Mono-, Di-, Tri- oder Tetraester der nachstehend beschriebenen, mindestens eine Säuregruppe pro Molekül enthaltenden, olefinisch ungesättigten Monomeren (a2) mit den vorstehend beschriebenen Hexiten,
- die Mono-, Di-, Tri- oder Tetraether der nachstehend beschriebenen ungesättigten Alkohole (a1) mit den vorstehend beschriebenen Hexiten oder
- die Umsetzungsprodukte der nachstehend beschriebenen, mindestens eine Säuregruppe pro Molekül enthaltenden, olefinisch ungesättigten Monomeren (a2) mit Diepoxiden wie Bisphenol-A-diglycidylether

Weitere Beispiele bevorzugter Verbindungen (B1.4) sind aus den Patentschriften DE-C-197 22 862, DE-A-196 45 761, EP-A-0 522 419 oder EP-A-0 522 420 bekannt.

Von diesen wird Trimethylolpropanmonoallylether als Verbindung (B1.4) ganz besonders bevorzugt verwendet.

Zusätzlich zu diesen Verbindungen (B1.4) können noch die Umsetzungsprodukte von 1-(1-Isocyanato-1-methylethyl)-3-(1-methylethenyl)-benzol (TMI® von der Firma CYTEC) mit den vorstehend beschriebenen, mindestens drei isocyanatreaktive funktionelle Gruppen enthaltenden Verbindungen verwendet werden. Auch hier wird die Umsetzung in einem Molverhältnis durchgeführt, daß das resultierende Umsetzungsprodukt noch mindestens zwei isocyanatreaktive funktionelle Gruppen im Molekül enthält.

Für die Herstellung der hydrophilen Polyurethane (B) werden in die Polyurethanpräpolymere (B1) des weiteren Verbindungen (B1.5) mit mindestens einer hydrophilen funktionellen Gruppe und mindestens zwei isocyanatreaktiven funktionelle Gruppen eingebaut.

Die resultierenden hydrophilen Polyurethanpräpolymere (B1) enthalten entweder
(b1) hydrophile funktionelle Gruppen, die durch Neutralisationsmittel und/oder Quaternisierungsmittel in Kationen überführt werden können, und/oder kationische Gruppen, insbesondere Ammoniumgruppen,
   oder
(b2) funktionelle Gruppen, die durch Neutralisationsmittel in Anionen überführt werden können, und/oder anionische Gruppen, insbesondere Carbonsäure- und/oder Carboxylatgruppen,
   und/oder
(b3) nichtionische hydrophile Gruppen, insbesondere Poly(alkylenether)-Gruppen.

Beispiele geeigneter erfindungsgemäß zu verwendender funktioneller Gruppen (b1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (b1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter erfindungsgemäß zu verwendender funktioneller Gruppen (b2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (b1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (b2) sind Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Die Neutralisation kann in organischer Phase oder in wäßriger Phase erfolgen. Bevorzugt wird als Neutralisationsmittel Dimethylethanolamin und/oder Triethylamin eingesetzt.

Die Einführung von hydrophilen funktionellen (potentiell) kationischen Gruppen (b1) in die Polyurethanpräpolymere (B1) erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind die vorstehend beschriebenen, insbesondere Hydroxylgruppen sowie primäre und/oder sekundäre Aminogruppen, von denen die Hydroxylgruppen bevorzugt verwendet werden.

Beispiele geeigneter Verbindungen dieser Art sind 2,2-Dimethylolethyl- oder - propylamin, die mit einem Keton blockiert sind, wobei die resultierende Ketoximgruppe vor der Bildung der kationischen Gruppe (b1) wieder hydrolysiert wird, oder N,N-Dimethyl-,N,N-Diethyl- oder N-Methyl-N-ethyl-2,2-dimethylolethyl- oder -propylamin.

Die Einführung von hydrophilen funktionellen (potentiell) anionischen Gruppen (b2) in die Polyurethanpräpolymere (B1) erfolgt über den Einbau von Verbindungen, die mindestens eine gegenüber Isocyanatgruppen reaktive und mindestens eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am ###-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die ###,###-Dimethylolalkansäuren der allgemeinen Formel R¹¹⁻C(CH₂OH)₂COOH, wobei R¹¹ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Hydrophile funktionelle nichtionische Poly(oxyalkylen)gruppen (b3) können als laterale oder endständige Gruppen in die Polyurethanmoleküle eingeführt werden. Hierfür können neben den vorstehend beschriebenen Polyetherdiolen beispielsweise Alkoxypoly(oxyalkylen)alkohole mit der allgemeinen Formel R¹²O-(-CH₂-CHR¹³-O-)ᵣ H in der R¹² für einen Alkylrest mit 1 bis 6 Kohlenstoffatomen, R¹³ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Die Auswahl der hydrophilen funktionellen Gruppen (b1) oder (b2) ist so zu treffen, daß keine störenden Reaktionen, wie etwa Salzbildung oder Vernetzung mit den funktionellen Gruppen, die gegebenenfalls in den übrigen Bestandteilen des Polyurethans (B), der Pfropfmischpolymerisate, des Beschichtungsstoffs, der Dichtungsmasse oder des Klebstoffs vorliegen, möglich sind. Der Fachmann kann daher die Auswahl in einfacher Weise anhand seines Fachwissens treffen.

Von diesen hydrophilen funktionellen (potentiell) ionischen Gruppen (b1) und (b2) und den hydrophilen funktionellen nichtionischen Gruppen (b3) sind die (potentiell) anionischen Gruppen (b2) vorteilhaft und werden deshalb besonders bevorzugt verwendet.

Die Herstellung der vorstehend beschriebenen Polyurethanpräpolymere (B1) aus den vorstehend beschriebenen Ausgangsverbindungen (B1.1) bis (B1.5) weist gleichfalls keine methodischen Besonderheiten auf, sondern erfolgt in Masse oder in einem inerten organischen Medium, vorzugsweise in einem inerten organischen Medium, wobei die vorstehend beschriebenen polaren organischen Lösemittel bevorzugt angewandt werden. Hierbei kann die Umsetzung in mehreren Stufen oder in einer Stufe erfolgen. Wesentlich ist, daß die Umsetzung so lange erfolgt, bis der Gehalt an freien Isocyanatgruppen konstant ist.

Die endständigen freien Isocyanatgruppen der resultierenden hydrophilen oder hydrophoben Polyurethanpräpolymeren (B1) werden mit mindestens einem der vorstehend beschriebenen Blockierungsmittel (B1.7) umgesetzt, wodurch das selbstvernetzende hydrophile oder hydrophobe Polyurethan (B) mit endständigen blockierten Isocyanatgruppen resultiert.

Enthält das hydrophile oder hydrophobe Polyurethanpräpolymer (B1) bereits seitenständige blockierte Isocyanatgruppen, können seine endständigen freien Isocyanatgruppen gleichfalls mit dem Blockierungsmittel (B1.7) umgesetzt werden, wodurch das erfindungsgemäße Polyurethan (B) mit endständigen und seitenständigen blockierten Isocyanatgruppen resultiert.

Indes können im Falle der hydrophilen oder hydrophoben Polyurethanpräpolymeren (B 1) mit seitenständigen blockierten Isocyanatgruppen die endständigen freien Isocyanatgruppen mit mindestens einer Verbindung (B1.8) umgesetzt werden, so daß ein Molekulargewichtsaufbau der erfindungsgemäßen Polyurethane (B) resultiert.

Beispiele geeigneter Verbindungen (B1.8) sind die vorstehend beschriebenen niedermolekularen Polyole (B1.2), Tetrole, Pentite oder Hexite.

Weitere Beispiele geeigneter Verbindungen (B1.8) sind Polyamine oder Aminoalkohole.

Beispiele geeigneter Polyamine (B1.8) weisen mindestens zwei primäre und/oder sekundäre Aminogruppen auf. Polyamine (B 1.8) sind im wesentlichen Alkylenpolyamine mit 1 bis 40 Kohlenstoffatomen, vorzugsweise etwa 2 bis 15 Kohlenstoffatomen. Sie können Substituenten tragen, die keine mit IsocyanatGruppen reaktionsfähige Wasserstoffatome haben. Beispiele sind Polyamine (B1.8) mit linearer oder verzweigter aliphatischer, cycloaliphatischer oder aromatischer Struktur und wenigstens zwei primären Aminogruppen.

Als Diamine (B1.8) sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine (B1.8) sind Hydrazin, Alkyl- oder Cycloalkyldiamine wie Propylendiamin und 1-Amino-3-aminomethyl-3,5,5-trimethylcyclohexan.

Es können auch Polyamine (B1.8) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine (B1.8) sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497). Die Polyamine können auch mit Vorteil zur Herstellung der Verbindungen (B1.1) verwendet werden.

Beispiele geeigneter Aminoalkohole (B 1.8) sind Ethanolamin, Diethanolamin oder Triethanolamin. Die Aminoalkohole können auch mit Vorteil zur Herstellung der Verbindungen (B1.3) oder (B1.4) verwendet werden.

Auch die Umsetzung der Polyurethanpräpolymeren (B1) mit den Verbindungen (B1.8) oder den Blockierungsmitteln (B1.7) weist keine methodischen Besonderheiten auf, sondern erfolgt in Masse oder in einem inerten organischen Medium, vorzugsweise in einem inerten organischen Medium, wobei die vorstehend beschriebenen polaren organischen Lösemittel bevorzugt angewandt werden. Wesentlich ist, daß die Umsetzung so lange erfolgt, bis keine freien Isocyanatgruppen mehr nachweisbar sind.

Der Gehalt der Polyurethane (B), an olefinisch ungesättigten Gruppen kann sehr breit variieren. Vorzugsweise liegt er bei 0,01 bis 30, bevorzugt 0,1 bis 25, besonders bevorzugt 0,2 bis 20, ganz besonders bevorzugt 0,25 bis 15 und insbesondere 0,3 bis 10 Gew.-%, jeweils bezogen auf das Polyurethan (B).

Ebenso kann der Gehalt der Polyurethane (B),
an blockierten Isocyanatgruppen sehr breit variieren. Vorzugsweise liegt er bei 0,01 bis 30, bevorzugt 0,1 bis 25, besonders bevorzugt 0,2 bis 20, ganz besonders bevorzugt 0,25 bis 15 und insbesondere 0,3 bis 10 Gew.-%, jeweils bezogen auf das Polyurethan (B).

Besonders vorteilhafte hydrophile oder hydrophobe
Polyurethane (B) enthalten hierbei im statistischen Mittel
- mindestens eine, vorzugsweise 1 bis 2 und insbesondere 1 bis 3 seitenständige,
- mindestens eine seitenständige und mindestens eine endständige, vorzugsweise 1 bis 2 seitenständige und 1 bis 2 endständige,
blockierte Isocyanatgruppen im Molekül.

Besonders vorteilhafte hydrophile oder hydrophobe Polyurethane (B), enthalten hierbei im statistischen Mittel
- mindestens eine, vorzugsweise 1 bis 2 und insbesondere 1 bis 3 seitenständige,
- mindestens eine, vorzugsweise 1 bis 2 und insbesondere 1 bis 3 endständige oder
- mindestens eine seitenständige und mindestens eine endständige, vorzugsweise 1 bis 2 seitenständige und 1 bis 2 endständige,
olefinisch ungesättigte Gruppen pro Molekül.

Im Rahmen des erfindungsgemäßen Verfahrens werden die Polyurethane (B), in einem wäßrigen Medium dispergiert. Zum Zweck der Dispergierung werden die hydrophilen Polyurethane (B), die die vorstehend beschriebenen (potentiell) ionischen hydrophilen funktionellen Gruppen (b1) oder (b2) enthalten, mit mindestens einem der vorstehend beschriebenen Neutralisationsmittel neutralisiert und hiernach dispergiert. Bei den hydrophilen Polyurethanen (B), die nur die nichtionischen hydrophilen funktionellen Gruppen (b3) enthalten, erübrigt sich die Anwendung von Neutralisationsmitteln.

Das wäßrige Medium selbst enthält im wesentlichen Wasser. Hierbei kann das wäßrige Medium in untergeordneten Mengen organische Lösemittel, Neutralisationsmittel, Vernetzungsmittel und/oder lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Die resultierenden Polyurethandispcrsionen (B), werden für die Herstellung der Pfropfarischpolymerisate, inklusive die erfindungsgemäßen Pfropfmischpolymerisate, die den wesentlichen Bestandteil der Wasserbasislacke bilden, verwendet.

Die Pfropfmischpolymerisate, inklusive die erfindungsgemäßen, sind nach einer ersten vorteilhaften Variante herstellbar, indem man mindestens ein hydrophiles Polyurethan (B) in einem wäßrigen Medium dispergiert, wonach man eine Mischung aus mindestens einem Monomer (a1) mit mindestens einer isocyanatreaktiven funktionellen Gruppe und mindestens einem hiermit copolymerisierbaren Monomer (a2) in seiner Gegenwart in Emulsion radikalisch (co)polymensiert.

Nach einer zweiten vorteilhaften Variante sind die Pfropfmischpolymerisate, inklusive die erfindungsgemäßen, herstellbar, indem man mindestens ein hydrophobes Polyurethan (B) in einem wäßrigen Medium dispergiert. Vorteilhafterweise wird dies in einem starken Scherfeld durchgeführt. Methodisch gesehen weist dieses Verfahren keine Besonderheiten auf, sondern kann beispielsweise nach den in der europäischen Patentanmeldung EP-A-0 401 565 beschriebenen Dispergierverfahren erfolgen. Hiernach wird eine Mischung aus mindestens einem Monomer (a1) mit mindestens einer isocyanatreaktiven funktionellen Gruppe und mindestens einem hiermit copolymerisierbaren Monomer (a2) in der Gegenwart des dispergierten Polyurethans (B) in Emulsion radikalisch (co)polymerisiert. Erfindungsgemäß ist es für diese Variante von Vorteil, wenn das Monomer (a2) mindestens eine der vorstehend beschriebenen hydrophilen funktionellen Gruppen enthält. Hinsichtlich der Auswahl der hydrophilen funktionellen Gruppen gilt das vorstehend Gesagte.

Als isocyanatreaktive funktionelle Gruppen werden vorzugsweise die vorstehend beschriebenen verwendet.

Beispiele für Monomere (a1), die für die Herstellung der Pfropfinischpolymerisate, inklusive der erfindungsgemäßen, geeignet sind, sind:
- Hydroxyalkylester der Acrylsäure, Methacrylsäure einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat oder -crotonat; 1,4-Bis(hydroxymethyl)cyclohexan-, Octahydro-4,7-methano-1H-indendimethanol- oder Methylpropandiolmonoacrylat, -monomethacrylat, - monoethacrylat oder -monocrotonat; oder Umsetzungsprodukte aus cyclischen Estern, wie z.B. epsilon-Caprolacton und diesen Hydroxyalkylestern;
- olefinisch ungesättigte Alkohole wie Allylalkohol, 4-Hydroxybutylvinylether oder Polyole wie Trimethylolpropanmono- oder - diallylether oder -divinylether oder Pentaerythritmono-, -di- oder - triallylether oder -di- oder -trivinylether;
- Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;
- (Meth)Acrylsäureamide wie (Meth)Acrylsäureamid, N-Methyl-, N-Ethyl-, N-Propyl-, N-Butyl-, N-Cyclohexyl-, N-Methylol-, N,N-Dimethylol-, N-Methoxymethyl- und/oder N-Methoxybutyl-(meth)acrylsäureamid; diese Monomeren können auch als hydrophile funktionelle Gruppen enthaltende Monomere (a2) verwendet werden. Zu diesem Zweck werden sie mit den vorstehend beschriebenen Neutralisationsmitteln neutralisiert oder mit Quaternisierungsmitteln umgesetzt.

Die vorstehend genannten höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren (a1) solche Mengen zu verstehen, welche nicht zur Vernetzung oder Gelierung der aufgepfropften (Meth)Acrylatcopolymerisate (A) führen. So kann der Anteil an Trimethylolpropanmonoallylether 2 bis 10 Gew.-%, bezogen auf das Gesamtgewicht der zur Herstellung des Polyacrylatharzes eingesetzten Monomeren (a1) und (a2) betragen.

Beispiele für Monomere (a2), die für die Herstellung der Pfropfmischpolymerisate, inklusive der erfmdungsgemäßen, geeignet sind, sind:
- (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der aufgepfropften (Meth)Acrylatcopolymerisate (A) führen.
- Mindestens eine Säuregruppe, vorzugsweise eine Carboxylgruppe, pro Molekül tragende ethylenisch ungesättigte Monomere oder ein Gemisch aus solchen Monomeren. Besonders bevorzugt werden Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren oder deren Teilester verwendet werden. Desweiteren kommen Maleinsäuremono(meth)acryloyloxyethylester, Bernsteinsäuremono(meth)acryloyloxyethylester und Phthalsäuremono(meth)acryloyloxyethylester in Betracht.
- Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- Epoxidgruppen enthaltende Monomere wie die Glycidylester der Acrylsäure, Methacrylsäure, Ethacrylsäure, Crotonsäure, Maleinsäure, Fumarsäure und/oder Itaconsäure;
- vinylaromatische Kohlenwasserstoffe, wie Styrol, alpha-Alkylstyrole, insbesondere alpha-Methylstyrol, Arylstyrole, insbesondere Diphenylethylen, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure.
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Aus diesen vorstehend beispielhaft beschriebenen geeigneten Monomeren (a1) und (a2) kann der Fachmann die für den jeweiligen Verwendungszweck besonders gut geeigneten hydrophilen oder hydrophoben Monomeren (a1) und (a2) anhand ihrer bekannten physikalisch chemischen Eigenschaften und Reaktivitäten leicht auswählen. Gegebenenfalls kann er zu diesem Zwecke einige wenige orientierende Vorversuche durchführen. Insbesondere wird er hierbei darauf achten, daß die Monomeren (a1) oder (a2) keine funktionellen Gruppen, insbesondere (potentiell) ionische funktionelle Gruppen, enthalten, die mit anderen (potentiell) ionischen funktionellen Gruppen, die beispielsweise in den hydrophilen Polyurethanen (B) vorhanden sind, unerwünschte Wechselwirkungen eingehen.

Erfindungsgemäß werden die Monomeren (a1) und (a2) so ausgewählt, daß das Eigenschaftsprofil der aufgepfropften (Meth)Acrylatcopolymerisate (A) im wesentlichen von den vorstehend beschriebenen hydrophilen oder hydrophoben (Meth)Acrylatmonomeren (a1) und (a2) bestimmt wird, wobei die anderen Monomeren (a1) und (a2) dieses Eigenschaftsprofil in vorteilhafter Weise breit variieren.

Methodisch gesehen weist die Herstellung der Pfropfmischpolymerisate, inklusive der erfindungsgemäßen, keine Besonderheiten auf, sondern erfolgt nach den üblichen und bekannten Methoden der radikalischen Emulsionspolymerisation in Gegenwart mindestens eines Polymerisationsinitiators, so wie sie beispielsweise in den Patentschriften DE-C-197 22 862, DE-A-196 45 761, EP-A-0 522 419 oder EP-A-0 522 420 beschrieben wird.

Hierbei können die Monomeren (a1) und (a2) auch mit Hilfe eines Teils einer Polyurethandispersion (B) und Wasser in eine Präemulsion gebracht werden, die dann langsam einer Vorlage zudosiert wird, worin die eigentliche Emulsionspolymerisation abläuft.

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.%, besonders bevorzugt von 0,75 bis 10 Gew.-%, bezogen auf das Gesamtgewicht der Monomeren (a1) und (a2), eingesetzt.

In den wäßrigen Emulsionen werden dann die Monomeren (a1) und (a2) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Polymerisation auch bei Temperaturen oberhalb 100 °C durchgeführt werden.

Es ist bevorzugt, daß mit dem Initiatorzulauf einige Zeit, im allgemeinen ca. 1 bis 15 Minuten, vor dem Zulauf der Monomeren (a1) und (a2) begonnen wird. Ferner ist ein Verfahren bevorzugt, bei dem die Initiatorzugabe zum gleichen Zeitpunkt wie die Zugabe der Monomeren (a1) und (a2) begonnen und etwa eine halbe Stunde, nachdem die Zugabe der Monomeren (a1) und (a2) beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomeren (a1) und (a2) im wesentlichen vollständig umgesetzt worden sind. "Im wesentlichen vollständig umgesetzt" soll bedeuten, daß vorzugsweise 100 Gew.-% der eingesetzten Monomeren (a1) und (a2) umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Pfropfmischpolymerisation kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht.

In den Pfropfmischpolymerisaten kann das Mengenverhältnis von Kern zu Schale außerordentlich breit variieren, was ein besonderer Vorteil der Pfropfmischpolymerisate, insbesondere erfindungsgemäßen Pfropfmischpolymerisate, ist. Vorzugsweise liegt dieses Verhältnis bei 1 : 100 bis 100 : 1, bevorzugt 1 : 50 bis 50 : 1, besonders bevorzugt 30 : 1 bis 1 : 30, ganz besonders bevorzugt 20 : 1 bis 1 : 20 und insbesondere 10 : 1 bis 1 : 10. Ganz besondere Vorteile resultieren, wenn dieses Verhältnis in etwa bei 3,5 : 1 bis 1 : 3,5, insbesondere 1,5 : 1 bis 1 : 1,5 liegt.

Bei der erfindungsgemäß bevorzugten Verwendung (potentiell) anionischer hydrophiler funktioneller Gruppen (b2), insbesondere von Carbonsäuregruppen, resultieren weitere besondere Vorteile, wenn in den erfindungsgemäßen Pfropfmischpolymerisaten das Verhältnis von Säurezahl der Schale zu Säurezahl des Kerns > 1, vorzugsweise > 3, bevorzugt > 5, besonders bevorzugt > 7, ganz besonders bevorzugt > 9 und insbesondere > 10 ist.

In den Wasserbasislacken sind die Pfropfmischpolymerisate, inklusive die erfindungsgemäßen, vorteilhafterweise in einer Menge von 1,0 bis 50, bevorzugt 2,0 bis 40 und, besonders bevorzugt 3,0 bis 35, ganz besonders bevorzugt 4,0 bis 30 und insbesondere 5,0 bis 25 Gew.-%, jeweils bezogen auf das Gesamtgewicht des jeweiligen Wasserbasislacks, enthalten.

Der weitere wesentliche Bestandteil des Wasserbasislacks ist mindestens ein farb- und/oder effektgebendes Pigment. Die Pigmente können aus anorganischen oder organischen Verbindungen bestehen. Der Wasserbasislack gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Der Anteil der Pigmente an dem Wasserbasislack kann außerordentlich breit variieren und richtet sich vor allem nach der Deckkraft der Pigmente, dem gewünschten Farbton und dem gewünschten optischen Effekt. Vorzugsweise sind die Pigmente in dem Wasserbasislack in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogen auf das Gesamtgewicht des Wasserbasislacks, enthalten. Dabei kann auch das Pigment/Bindemittel Verhältnis, d. h. das Verhältnis der Pigmente zu den erfindungsgemäßen Polyurethanen (B) und/oder zu den erfindungsgemäßen Pfropfmischpolymerisaten sowie sonstigen gegebenenfalls vorhandenen Bindemitteln, außerordentlich breit variieren. Vorzugsweise liegt dieses Verhältnis bei 6,0 : 1,0 bis 1,0 : 50, bevorzugt 5 : 1,0 bis 1,0 : 50, besonders bevorzugt 4,5 : 1,0 bis 1,0 : 40, ganz besonders bevorzugt 4 : 1,0 bis 1,0 : 30 und insbesondere 3,5 : 1,0 bis 1,0 : 25.

Diese Pigmente können auch über Pigmentpasten in die erfindungsgemäßen Wasserbasislacke eingearbeitet werden, wobei als Reibharze u.a. die Polyurethane (B) und/oder deren Pfropfmischpolymerisate in Betracht kommen.

Der Wasserbasislack kann gegebenenfalls noch mindestens ein Vernetzungsmittel enthalten.

Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Sofern sie verwendet werden, werden die Vernetzungsmittel in den erfindungsgemäßen Wasserbasislacken in einer Menge von 0,1 bis 30, bevorzugt 0,3 bis 20, besonders bevorzugt 0,5 bis 10 und insbesondere 1,0 bis 8,0 Gew.-%, jeweils bezogen auf das Gesamtgewicht des jeweiligen Wasserbasislacks, angewandt.

Zusätzlich zu den vorstehend beschriebenen Bestandteilen kann der Wasserbasislack übliche und bekannte Bindemittel und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535 beschriebenen, Polyester, insbesondere die in den Patentschriften DE-A-40 09 858 oder DE-A-44 37 535 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP-A-0 521 928, EP-A-0 522 420, EP-A-0 522 419, EP-A-0 730 613 oder DE-A-44 37 535 beschriebenen, oder Polyharnstoffe.

Beispiele geeigneter Additive sind
- organische und anorganische Füllstoffe wie Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe«, verwiesen;
- thermisch härtbare Reaktiverdünner wie stellungsisomere Diethyloctandiole oder Hydroxylgruppen enthaltende hyperverzweigte Verbindungen oder Dendrimere;
- niedrig siedende und/oder hochsiedende organische Lösemittel ("lange Lösemittel");
- UV-Absorber;
- Lichtschutzmittel wie HALS-Verbindungen, Benztriazole oder Oxalanilide;
- Radikalfänger;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat oder mit Aminen blockierte organische Sulfonsäuren;
- Entlüftungsmittel wie Diazadicycloundecan;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Titandioxid, Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs (ergänzend wird auf das Buch von Johan Bielemann »Lackadditive«, Wiley-VCH, Weinheim, New York, 1998, Seiten17 bis 30, verwiesen); Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; und/oder
- Flammschutzmittel.

Weitere Beispiele geeigneter Lackadditive werden in dem Lehrbuch »Lackadditive« von Johan Bieleman, Wiley-VCH, Weinheim, New York, 1998, beschrieben.

Die Wasserbasislacke weisen bei Spritzviskosität vorzugsweise einen Festkörpergehalt von 5,0 bis 60, bevorzugt 10 bis 60, besonders bevorzugt 13 bis 60 und insbesondere 13 bis 55 Gew.-%, jeweils bezogen auf das Gesamtgewicht des jeweils verwendeten Wasserbasislacks.

Die Herstellung des Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver oder Extruder nach den für die Herstellung der jeweiligen Wasserbasislacke geeigneten Verfahren.

Für das erfindungsgemäße Verfahren werden sämtliche üblichen und bekannten Klarlacke verwendet, was ein besonderer Vorteil des erfindungsgemäßen Verfahrens ist.

Beispiele geeigneter bekannter Einkomponenten(1K)-, Zweikomponenten(2K)-oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vemetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542, der internationalen Patentanmeldung WO 96/32452 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor. Pulverslurrry-Klarlacke bieten für die farb- und/oder effektgebende Mehrschichtlackierung besondere Vorteile und werden deshalb erfindungsgemäß besonders bevorzugt verwendet.

Die mit Hilfe des erfindungsgemäßen Verfahrens hergestellten farb- und/oder effektgebenden Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rißbildung (mudcracking) oder Verlaufsstörungen oder Oberflächenstrukturen in den Klarlackierungen auf.

Insbesondere weisen die Mehrschichtlackierungen einen hervorragenden Metallic-Effekt, einen hervorragenden D.O.I. (distinctiveness of the reflected image) und eine hervorragende Oberflächenglätte, auf. Sie sind witterungsstabil, resistent gegenüber Chemikalien und Vogelkot und kratzfest und zeigen ein sehr gutes Reflow-Verhalten.

Nicht zuletzt erweist es sich aber als ganz besonderer Vorteil, daß bei der Herstellung der Mehrschichtlackierungen selbst dann keine Rißbildung oder Kocher mehr resultieren, wenn die Wasserbasislackschichten mit Pulverslurry-Klarlacken überschichtet und hiernach gemeinsam mit diesen eingebrannt werden. Hierdurch ist es möglich, die besonderen Vorteile von Wasserbasislacken mit den besonderen Vorteilen von Pulverslurry-Klarlacken zu kombinieren. Darüber hinaus erweisen sich gerade diese farb- und/oder effektgebenden Mehrschichtlackierungen als besonders haftfest - und dies auch in ihrer Verwendung als Reparaturlackierungen. Demzufolge weisen auch die hiermit beschichteten Substrate besondere Vorteile wie eine längere Gebrauchsdauer, einen besseren ästhetischen Eindruck beim Betrachter, und eine bessere technologische Verwertbarkeit auf, was sie gerade in der Automobilserienlackierung wirtschaftlich besonders attraktiv macht.

Über ihre Verwendung in dem erfindungsgemäßen Verfahren hinaus können die Polyurethane (B) als solche auch noch für die Herstellung von Beschichtungsstoffen, insbesondere Lacke, Klebstoffen und Dichtungsmassen verwendet werden. handelt es sich um hydrophile Polyurethane (B) ist es von Vorteil, sie in der Form einer Dispersion in einem wäßrigem Medium zu verwenden. Die resultierenden Polyurethandispersionen (B) sind ebenfalls hervorragend für die Herstellung wäßriger Beschichtungsstoffe, Klebstoffe und Dichtungsmassen geeignet.

Die erfindungsgemäßen Pfropfmischpolymerisate können aus den Primärdispersionen, in denen sie anfallen, isoliert und den unterschiedlichsten Verwendungszwecken, insbesondere in lösemittelhaihgen, wasser- und lösemittelfreien pulverförmigen festen oder wasser- und lösemittelfreien flüssigen Beschichtungsstoffen, Klebstoffen und Dichtungsmassen, zugeführt werden. Erfindungsgemäß ist es indes von Vorteil, die Primärdispersionen als solche für die Herstellung von wäßrigen Beschichtungsstoffen, Klebstoffen und Dichtungsmassen zu verwenden.

Die erfindungsgemäßen wäßrigen Klebstoffe können außer den Polyurethanen (B) und/oder den erfindungsgemäßen Pfropfmischpolymerisaten weitere geeignete übliche und bekannte Bestandteile in wirksamen Mengen enthalten. Beispiele geeigneter Bestandteile sind die vorstehend beschriebenen Vernetzungsmittel und Additive, soweit sie für die Herstellung von Klebstoffen in Betracht kommen.

Die erfindungsgemäßen wäßrigen Dichtungsmassen können ebenfalls außer den Polyurethanen (B) und/oder den erfindungsgemäßen Pfropfmischpolymerisaten weitere geeignete übliche und bekannte Bestandteile in wirksamen Mengen enthalten. Beispiele geeigneter Bestandteile sind ebenfalls die vorstehend beschriebenen Vernetzungsmittel und Additive, soweit sie für die Herstellung von Dichtungsmassen in Betracht kommen.

Die Primärdispersionen der erfindungsgemäßen Pfropfmischpolymerisate sind vor allem für die Herstellung der erfindungsgemäßen wäßrigen Beschichtungsstoffe, insbesondere der erfindungsgemäßen wäßrigen Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen, wenn sie zur Herstellung der erfindungsgemäßen Wasserbasislacke verwendet werden.

Diese außerordentlich breite Verwendbarkeit der Polyurethane (B), der erfindimgsgemäßen Polyurethandispersionen (B), der erfindungsgemäßen Pfropfmischpolymerisate und ihrer erfindungsgemäßen Primärdispersionen, die weit über den Rahmen des erfindungsgemäßen Verfahrens hinausgeht, stellt einen weiteren besonderen Vorteil der vorliegenden Erfindung dar.

### Beispiele und Vergleichsversuche

### Herstellbeispiel 1

### Die Herstellung eines erfindungsgemäß zu verwendendem Polyurethans (B)

In einem Reaktionsgefäß, ausgerüstet mit Rührer, Innenthermometer, Rückflußkühler und elektrischer Heizung, wurden 692,7 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton, 98,4 Gewichtsteile Dimethylolpropionsäure und 50,1 Gewichtsteile Trimethylolpropanmonoallylether in 431 Gewichtsteilen Methylethylketon und 91 Gewichtsteilen N-Methylpyrrolidon gelöst. Die Lösung wurde auf 45 °C erwärmt, wonach 383,7 Gewichtsteile Isophorondiisocyanat hinzugegeben wurden. Nach dem Abklingen der exothermen Reaktion wurde die Reaktionsmischung unter Rühren langsam auf 80 °C erwärmt. Es wurde bei dieser Temperatur weiter gerührt, bis der Gehalt an freien Isocyanatgruppen bei 1,1 bis 1,3 Gew.-% lag und konstant war. Danach wurde die Reaktionsmischung auf 50 °C abgekühlt, und es wurden 12 Gewichtsteile N-(Aminoethyl)ethanolamin hinzugegeben. Die resultierende Reaktionsmischung wurde so lange bei 50 °C gerührt, bis der Gehalt an freien Isocyanatgruppen bei 0,6 bis 0,7 Gew.-% lag und konstant war. Hiernach wurden 17 Gewichtsteile Methylethylketoxim hinzugegeben, und resultierende Reaktionsmischung wurde so lange bei 60 °C gerührt, bis der Gehalt an freien Isocyanatgruppen bei 0,1 Gew.-% lag bzw. des keine freien Isocyanatgruppen mehr nachweisbar waren. Anschließend wurden bei 50 °C 145 Gewichtsteile Methoxypropanol und 52 Gewichtsteile Dimethylethanolamin hinzugegeben. 30 Minuten nach der Aminzugabe wurde der Neutralisationsgrad bestimmt und gegebenenfalls mit weiterem Diethanolamin auf 80 ± 1% eingestellt. Danach wurden während 30 Minuten 2.100 Gewichtsteile deionisiertes Wasser unter Rühren hinzugegeben. Aus der resultierenden Dispersion wurde das Methylethylketon bei 60 °C unter Vakuum abdestilliert. Hiernach wurden eventuelle Lösemittel- und Wasserverluste ausgeglichen. Die so erhaltene Dispersion des erfindungsgemäß zu verwendenden Polyurethans (B) wies einen Feststoffgehalt von 23,5 Gew.-% (eine Stunde bei 130 °C), einen pH-Wert 7,3 und einer Säurezahl von 34,6 mg KOH/g auf.

### Herstellbeispiel 2

### Die Herstellung der Primärdispersion eines erfindungsgemäß zu verwendenden Pfropfmischpolymerisats

1.615,2 Gewichtsteile der Polyurethandispersion (B) gemäß Herstellbeispiel 1 wurden mit 736,2 Gewichtsteilen deionisiertem Wasser verdünnt und auf 85 °C erhitzt. Bei dieser Temperatur wurde der Dispersion unter Rühren ein Gemisch aus 150,2 Gewichtsteilen Styrol, 150,2 Gewichtsteilen Methylmethacrylat, 112,4 Gewichtsteilen n-Butylacrylat und 112,4 Gewichtsteilen Hydroxyethylmethacrylat während 3,5 Stunden gleichmäßig zugegeben. Mit Beginn der Zugabe der Monomerenmischung wurde eine Lösung von 7,9 Gewichtsteilen tert.-Butylperoxyethylhexanoat in 115,5 Gewichtsteilen Methoxypropanol innerhalb von 4 Stunden zugegeben. Die resultierende Reaktionsmischung wurde bei 85 °C so lange weiter gerührt, bis alle Monomeren abreagiert waren, wobei geringen Mengen an Initiator nachdosiert wurden. Das Gewichtsverhältnis von Polyurethan (B) zu Methacrylatcopolymerisat (A) lag bei 1 : 1. Die resultierende Primärdispersion des Pfropfmischpolymerisats wies eine sehr gute Lagerstabilität auf. Ihr Feststoffgehalt lag bei 34,7 Gew.-% (eine Stunde bei 130 °C) und ihr pH-Wert bei 7,2.

### Vergleichsversuch V1

### Die Herstellung eines bekannten Ethenylarylengruppen enthaltenden Polyurethans

Ein hydroxylgruppenhaltiger Polyester wurde gemäß der in der Patentschrift EP-A-0 608 021, Seite 6, Zeilen 22 bis 37 (intermediate A), angegebenen Vorschrift hergestellt. Hierzu wurde in einem geeigneten Reaktionsgefäß ein Gemisch aus 236 Gewichtsteilen Hexan-1,6-diol, 208 Gewichtsteilen Neopentylglykol, 616 Gewichtsteilen Hexahydrophthalsäureanhydrid und 6 Gewichtsteilen Benzyltriphenylphosphoniumchlorid vorgelegt und unter Stickstoff unter Rühren auf 120 °C erhitzt. Nach einer Stunde bei dieser Temperatur wurde die Reaktionsmischung auf 140 °C erhitzt. Hiernach wurden während zwei Stunden 1.000 Gewichtsteile des Glycidylesters von 1,1-Dimethyl-1-heptancarbonsäure (Cardura® E-10 der Firma Shell) zudosiert. Nach vier Stunden wies die Reaktionsmischung eine Säurezahl von 8,5 mg KOH/g auf. Es wurden noch einmal 80 Gewichtsteile Cardura® E-10 hinzugegeben. Nach weiteren zwei Stunden lag die Säurezahl der Reaktionsmischung unter 1 mg KOH/g.

Nach der auf Seite 7, Zeilen 1 bis 27 (Example I), der Patentschrift EP-A-0 608 021 angegebenen Vorschrift wurden 261,6 Gewichtsteile des vorstehend beschriebenen Polyesters, 55 Gewichtsteile N-Methylpyrrolidon und 0,1 Gewichtsteile Dibutylzinndiacetat vorgelegt. Zu dieser Mischung wurden während einer Stunde bei 90 °C 72,1 Gewichtsteile Isophorondiisocyanat zudosiert. Nach zwei Stunden bei 90 °C wurde die Reaktionsmischung auf 100 °C erhitzt. Bei dieser Temperatur wurden 16,3 Gewichtsteile TMI® während 15 Minuten hinzudosiert. Die resultierende Reaktionsmischung wurde während einer Stunde bei hundert °C gehalten.

Hiernach wurde die Reaktionsmischung auf 130 °C erhitzt, und es wurde bei dieser Temperatur unter Rühren und unter Stickstoff während einer Stunde eine Mischung aus 38,2 Gewichtsteilen Styrol, 9,2 Gewichtsteilen Methylmethacrylat, 33,1 Gewichtsteilen Acrylsäure, 66 Gewichtsteilen Cardura® E-10, 2,7 Gewichtsteilen Dicumylperoxid, 0,8 Gewichtsteilen 3-Mercaptopropionsäure und 51,9 Gewichtsteilen 2-Butoxyethanol hinzugegeben. Die resultierende Reaktionsmischung wurde während drei Stunden bei dieser Temperatur gehalten. Danach wurden bei 115 °C 18,1 Gewichtsteile Dimethylethanolamin zudosiert. Nach dem Abkühlen auf 90 °C wurden 782 Gewichtsteile deionisiertes Wasser unter Rühren während drei Stunden tropfenweise zudosiert, wodurch eine Sekundärdispersion mit einem Feststoffgehalt von 35,8 Gew.-% resultierte.

### Herstellbeispiele 3 bis 5 und Vergleichsversuche V2 und V3

### Die Herstellung erfindungsgemäß zu verwendender Wasserbasislacke (Herstellbeispiele 3 bis 5) und erfindungsgemäß nicht zu verwendender Wasserbasislacke (Vergleichsversuche V2 und V3)

Für die Herstellbeispiele 3 bis 5 wurden in einem Mischgefäß 9,5 Gewichtsteile deionisiertes Wasser vorgelegt. Unter Rühren wurden 10,5 Gewichtsteile einer wäßrigen Acrylatdispersion [Komponente (i) gemäß der Patentschrift DE-A-197 36 535; Acronal® 290 D der Firma BASF Aktiengesellschaft], 13,5 Gewichtsteile der erfindungsgemäßen Primärdispersion gemäß Beispiel 2, 10,4 Gewichtsteile des Verdickungsmittels 1 (Paste eines synthetischen Natrium-Magnesium-Schichtsilikats der Firma Laporte, 3%ig in Wasser), 8,0 Gewichtsteile deionisiertes Wasser, 0,28 Gewichtsteile einer 15 %igen wäßrigen Ammoniaklösung und 18,0 Gewichtsteile des Verdickungsmittels 2 (3%ige wäßrige Lösung eines Polyacrylsäureverdickers der Firma Allied Colloids) zugegeben.

Anschließend wurden unter Rühren 4,2 Gewichtsteile einer Pigmentpaste mit einem Rußgehalt von 10 Gew.% und einem Gehalt an der acrylierten Polyurethandispersion gemäß dem Beispiel D der Patentschrift DE-A-44 37 535 von 60 Gew.-%, 10,2 Gewichtsteile einer Füllstoffpaste mit einem Aerosilgehalt von 10 Gew.-% und einem Gehalt an der acrylierten Polyurethandispersion gemäß dem Beispiel D der Patentschrift DE-A-44 37 535 von 50 Gew.-%, 2,0 Gewichtsteile Butylglykol und 3,5 Gewichtsteil. (Herstellbeispiel 3) oder 2,0 Gewichtsteile (Herstellbeispiel 4) eines mit Methanol und Butanol veretherten Melaminharzes der Firma CYTEC hinzugefügt. Für das Herstellbeispiel 5 wurde kein Melaminharz verwendet.

In einem separaten Mischgefäß wurde eine Mischung aus 0,4 Gewichtsteilen einer handelsüblichen Aluminiumbronze (Alu-Stapa Hydrolux® der Firma Eckart, Al-Gehalt 65 Gew.-%) und 0,6 Gewichtsteilen Butylglykol verrührt. Anschließend wurde diese Mischung der anderen Mischung unter starkem Rühren portionsweise hinzugefügt.

In einem weiteren separaten Mischer wurden 1,3 Gewichtsteile eines Perlglanzpigments (Iriodin® 9103 Sterling Silber WR der Firma Merck) und 2,3 Gewichtsteile Butylglykol gemischt. Anschließend wurde diese Mischung der vorstehend beschriebenen unter starkem Rühren portionsweise hinzugegeben.

Die Tabelle 1 gibt einen Überblick über die Zusammensetzung der erfindungsgemäß zu verwendenden Wasserbasislacke der Herstellbeispiele 3 bis 5.

Für den Vergleichsversuch V2 wurde das Herstellbeispiel 3 wiederholt, nur daß anstelle der erfindungsgemäß zu verwendenden Primärdispersion gemäß Herstellbeispiel 2 die wäßrige Polyurethanharzdispersion gemäß Beispiel 1 der Patentschrift DE-A-43 39 870 [Komponente (ii)] verwendet wurde.

Für den Vergleichsversuch V3 wurde das Herstellbeispiel 3 wiederholt, nur das anstelle der erfindungsgemäß zu verwendenden Primärdispersion gemäß Herstellbeispiel 2 die bekannte Sekundärdispersion gemäß dem Vergleichsversuch V 1 verwendet wurde.

Die stoffliche Zusammensetzung der erfindungsgemäß nicht zu verwendenden Wasserbasislacke V3 und V2 findet sich ebenfalls in der Tabelle 1.

**Tabelle 1: Die Zusammensetzung der erfindungsgemäß zu verwendenden Wasserbasislacke (Herstellbeispiele 3 bis 5) und der erfindungsgemäß nicht zu verwendenden Wasserbasislacke (Vergleichsversuch V2 und V3)**

| **Bestandteile** | **Vergleichsversuche:** | | **Herstellbeispiel:** | | |
|---|---|---|---|---|---|
| | **V2** | **V3** | **3** | **4** | **5** |
| Deionisiertes Wasser | 9,5 | 9,5 | 9,5 | 9,5 | 9,5 |
| Komponente (i) | 10,5 | 10,5 | 10,5 | 10,5 | 10,5 |
| Komponente (ii) | 13,5 | - | - | - | - |
| Sekundärdispersion V1 | - | 13,5 | - | - | - |
| Primärdispersion (Hstb. 2) | - | - | 13,5 | 13,5 | 13,5 |
| Verdickungsmittel 1 | 10,4 | 10,4 | 10,4 | 10,4 | 10,4 |
| Deionisiertes Wasser | 8,0 | 8,0 | 8,0 | 8,0 | 8,0 |
| Ammoniaklösung | 0,28 | 0,28 | 0,28 | 0,28 | 0,28 |
| Verdickungsmittel 2 | 18,0 | 18,0 | 18,0 | 18,0 | 18,0 |
| Pigmentpaste | 4,2 | 4,2 | 4,2 | 4,2 | 4,2 |
| Füllstoffpaste | 10,2 | 10,2 | 10,2 | 10,2 | 10,2 |
| Butylglykol | 2,0 | 2,0 | 2,0 | 2, 0 | 2, 0 |
| Melaminharz | 3,5 | 3,5 | 3,5 | 2,0 | - |
| Aluminiumpaste | 0,4 | 0,4 | 0,4 | 0,4 | 0,4 |
| Butylglykol | 0,6 | 0,6 | 0,6 | 0,6 | 0,6 |
| Iriodin 9103 | 1,3 | 1,3 | 1,3 | 1,3 | 1,3 |
| Butylglykol | 2,3 | 2,3 | 2,3 | 2,3 | 2,3 |

Die Viskosität der Wasserbasislacke der Tabelle 1 wurde mit deionisiertem Wasser auf 90 bis 95 mPas bei einer Scherrate von 1.000/s eingestellt.

### Beispiele 1 bis 3 und Vergleichsversuche V4 und V5

### Die Herstellung von Mehrschichtlackierungen nach dem erfindungsgemäßen Verfahren (Beispiele 1 bis 3) und nach dem nicht erfindungsgemäßen Verfahren (Vergleichsversuche V4 und V5)

Für die Herstellung der Mehrschichtlackierung des Beispiels 1 wurde der Wasserbasislack des Herstellbeispiels 3 (vgl. Tabelle 1) verwendet.

Für die Herstellung der Mehrschichtlackierung des Beispiels 2 wurde der Wasserbasislack des Herstellbeispiels 4 (vgl. Tabelle 1) verwendet.

Für die Herstellung der Mehrschichtlackierung des Beispiels 3 wurde der Wasserbasislack des Herstellbeispiels 5 (vgl. Tabelle 1) verwendet.

Für die Herstellung der Mehrschichtlackierung des Vergleichsversuchs V4 wurde der Wasserbasislack des Vergleichsversuchs V2 (vgl. Tabelle 1) verwendet.

Für die Herstellung der Mehrschichtlackierung des Vergleichsversuchs V5 wurde Wasserbasislack des Vergleichsversuchs V3 (vgl. Tabelle 1) verwendet.

### A. Die Herstellung der Prüftafeln:

Für die Beispiele 1 bis 3 und die Vergleichsversuche V4 und V5 wurden zunächst Prüftafeln hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Dünnschichtfüller (Ecoprime® 60 der Firma BASF Coatings AG; anthrazitfarben) beschichtet, wonach die resultierende Füllerschicht während fünf Minuten bei 20 °C und einer relativen Luftfeuchtigkeit von 65% abgelüftet und in einem Umluftofen während fünf Minuten bei 80 °C getrocknet wurde. Hiernach wies die Füllerschicht eine Trockenschichtdicke von 15 µm auf.

Nach dem Abkühlen der Prüftafeln auf 20 °C wurden die Wasserbasislacke der Tabelle 1 appliziert, während fünf Minuten bei 20 °C und einer relativen Luftfeuchtigkeit von 65% abgelüftet und in einem Umluftofen während fünf Minuten bei 80 °C getrocknet, so daß die getrockneten Basislackschichten eine Trockenschichtdicke von etwa 15 µm aufwiesen.

Nach dem erneuten Abkühlen der Prüftafeln auf 20 °C wurden die Basislackschichten mit einem Pulverslurry-Klarlack gemäß der internationalen Patentanmeldung WO 96/32452 überschichtet. Die resultierende Pulverslurry-Klarlackschichten wurden während 3 Minuten bei 20 °C und einer relativen Luftfeuchtigkeit von 65% abgelüftet, und in einem Umluftofen während fünf Minuten bei 55 °C getrocknet. Die Trockenschichtdicke der resultierenden Klarlackschichten lag bei 55 bis 57µm.

Nach der Applikation aller drei Schichten wurden sie gemeinsam während 30 Minuten bei 155 °C eingebrannt, wodurch die Mehrschichtlackierungen der Beispiele 1 bis 3 und die Mehrschichtlackierungen der Vergleichsversuche V4 und V5 resultierten.

### B. Die Herstellung von Reparaturlackierungen:

Zur Simulation der Reparaturlackierung der gesamten Karosserie in der Linie (Serienreparatur) wurden die Prüftafeln gemäß den Beispielen 1 bis 3 und den Vergleichsversuchen V4 und V5 mit einem Schleifpapier mit 1.200-Körnung angeschliffen und gemäß der vorstehend beschriebenen Vorschrift noch einmal mit der jeweils gleichen Mehrschichtlackierung beschichtet (Doppellackierung).

### C. Die Bestimmung der Kochergrenze und Rißbildungsgrenze (mud cracking):

Nach der in dem vorstehenden Abschnitt A. angegebenen Vorschrift wurden Mehrschichtlackierungen hergestellt, bei denen die Basislackierungen im Keil von 3 bis 40µm aufgetragen wurden. Die Klarlackierungen wiesen eine Schichtdicke von 55 bis 57µm auf. Die Rißbildungsgrenze und die Kochergrenze geben die Schichtdicke an, ab der Oberflächenstörungen (hier Rißbildung = mud cracking und Kocher) in der Klarlackierung auftreten. Die Rißbildungsgrenze und die Kochergrenze sind ein Maß für die Verträglichkeit des Wasserbasislacks mit dem Klarlack bzw. der Basislackierung mit der Klarlackierung: je höher die Rißbildungsgrenze oder die Kochergrenze, desto besser die Verträglichkeit. Die entsprechenden Versuchsergebnisse finden sich in der Tabelle 2.

### D. Die Prüfung der Klarlackhaflung:

Die Prüfung der Klarlackhaftung wurde an unbelasteten Prüftafeln [vgl. den vorstehenden Abschnitt A. (Erstlackierung) und den vorstehenden Abschnitt B. (Reparaturlackierung)] nach drei Tagen Lagerung bei Raumtemperatur durchgeführt. Zu diesem Zweck wurden die Mehrschichtlackierungen mit einem Messer oder einem spitzen Dorn bis auf die Stahloberfläche geritzt. Anschließend wurden die Ritze während einer Minute unter Hochdruck mit Wasser bestrahlt (Hochdruckreiniger der Firma Kärcher), wobei der Wasserdruck 230 bar, die Wassertemperatur 20 °C und der Abstand der rotierenden Spritzdüse zu den Prüftafeln 6cm betrug. Die Beurteilung erfolgte visuell: zeigte die Mehrschichtlackierung keine Beschädigung, wurde sie mit "in Ordnung" (i.o.) beurteilt. Fand eine Delamination statt, wurde dies mit "nicht in Ordnung" (n.i.o.) beurteilt. Die Versuchsergebnisse finden sich ebenfalls in der Tabelle 2.

### E. Die Prüfung der Zwischenschichthaftung nach der Kugelschußprüfung:

Die Kugelschußprüfung wurde entsprechend der in der Fachwelt allgemein bekannten Daimler Chrysler- Spezifikation durchgeführt. Die entsprechenden Ergebnisse finden sich ebenfalls in der Tabelle 2.

### F. Die Prüfung der Zwischenschichthaftung nach der Belastung mit Schwitzwasserkonstantklima nach DIN 50017:

Die nach der in Abschnitt A. angegebenen Vorschrift hergestellten Prüftafeln wurden dem Schwitzwasserkonstantklima nach DIN 50017 ausgesetzt. Hiernach wurde die Zwischenschichthaftung mit dem Gitterschnittest nach DIN EN ISO 2409 nach 0 und 2 Stunden Regeneration bestimmt. Die Versuchsergebnisse finden sich ebenfalls in der Tabelle 2.

**Tabelle 2: Die Ergebnisse der Prüfungen gemäß den Abschnitten C. bis F.**

| **Prüfungen** | **Vergleichsversuche:** | | **Beispiele:** | | |
|---|---|---|---|---|---|
| | **V4** | **V5** | **3** | **4** | **5** |
| Abschnitt C.: | | | | | |
| Kochergrenze (µm): | 23 | 15 | 28 | 27 | 29 |
| Rißbildungsgrenze (µm): | 25 | 9,0 | 36 | 34 | 38 |

| Abschnitt D.: | | | | | |
|---|---|---|---|---|---|
| Wasserstrahltest: | n.i.o. | n.i.o. | i.o. | i.o. | i.o. |

| Abschnitt E.: | | | | | |
|---|---|---|---|---|---|
| Kugelschußprüfung: | | | | | |
| Erstlackierung | 7/1 | 12/0 | 6/1 | 8/1 | 7/1 |
| Reparaturlackierung | 17/0 | 33/0 | 16/1 | 17/1 | 15/1 |

| Abschnitt F.: | | | | | |
|---|---|---|---|---|---|
| Gitterschnitttest: | | | | | |
| Nach 0 Stunden Regeneration | GT0 | GT3 | GT0 | GT0 | GT0 |
| Nach 2 Stunden Regeneration | GT0 | GT1-2 | GT0 | GT0 | GT0 |

Die Ergebnisse der Tabelle 2 belegen, daß die nach dem erfindungsgemäßen Verfahren hergestellten Mehrschichtlackierungen der Beispiele 1 bis 3 den nicht nach dem erfindungsgemäßen Verfahren hergestellten Mehrschichtlackierungen gemäß den Vergleichsversuchen V4 und V5 hinsichtlich der Verträglichkeit von Wasserbasislack und Pulverslurry-Klarlack und der Zwischenschichthaftung eindeutig überlegen waren. Des weiteren wird untermauert, daß in der Mehrschichtlackierung des Vergleichsversuchs V5 der Wasserbasislack des Vergleichsversuchs V3 nicht mit dem Pulverslurry-Klarlack verträglich war, weswegen die Mehrschichtlackierung V5 auch eine sehr schlechte Einzelschlagbeständigkeit und eine schlechte Zwischenschichthaftung aufwies. Des weiteren belegen die Ergebnisse der Tabelle 2, daß aufgrund der erfindungsgemäßen Verwendung von Pfropfmischpolymerisaten mit blockierten Isocyanatgruppen das Vernetzungsmittel (Melaminharz) vollständig weggelassen werden konnte, ohne daß sich das Eigenschaftsprofil der Mehrschichtlackierungen verschlechterte. Ganz im Gegenteil wurde sogar bei der Mehrschichtlackierung des Beispiels 3 auf der Basis des melaminharcfreien Wasserbasislacks des Herstellbeispiels 5 eine Verbesserung gegenüber den Mehrschichtlackierungen der Beispiele 1 und 2 auf der Basis der melaminharzhaltigen Wasserbasislacke der Herstellbeispiel 3 und 4 beobachtet.

## Patentansprüche

1. Verfahren zur Herstellung farb- und/oder effektgebender Mehrschichtlackierungen auf grundierten oder ungrundierten Substraten, umfassend die folgenden Verfahrensschritte:
(I) Herstellen einer Basislackschicht durch Applikation eines Wasserbasislacks auf
(I.1) das Substrat,
(I.2) eine thermisch gehärtete Füllerlackierung oder
(I.3) eine getrockneten Füllerlackschicht,
(II) Trocknen der Basislackschicht,
(III) Herstellen einer Klarlackschicht durch Applikation eines Pulverslurry-Klarlacks auf die Basislackschicht und
(IV) gemeinsame Härtung der Basislackschicht (II) und der Klarlackschicht (III) oder der Füllerlackschicht (1.3), der Basislackschicht (II) und der Klarlackschicht (III), wodurch die Basislackierung und die Klarlackierung sowie gegebenenfalls die Füllerlackierung resultieren (Naß-in-naß-Verfahren);
**dadurch gekennzeichnet, daß** man einen Wasserbasislack verwendet, der mindestens ein Pfropfmischpolymerisat, enthaltend
(A) mindestens ein (Meth)Acrylatcopolymerisat und
(B) mindestens ein Polyurethan,
herstellbar, indem man
(1) mindestens ein hydrophiles oder hydrophobes selbstvernetzendes Polyurethan (B) mit im statistischen Mittel mindestens einer endständigen und/oder mindestens einer seitenständigen olefinisch ungesättigten Gruppe und mindestens einer blockierten Isocyanatgruppe pro Molekül in einem wäßrigen Medium dispergiert, wonach man
(2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert;
enthält.

2. Das Verfahren nach Anspruch 1, **dadurch gekennzeichnet, daß** das hydrophile oder hydrophobe selbstvernetzende Polyurethan (B) mindestens eine endständige und/oder mindestens eine seitenständige blockierte Isocyanatgruppe enthält.

3. Das Verfahren nach Anspruch 1 oder 2 **dadurch gekennzeichnet, daß** das aufgepfropfte (Meth)Acrylatcopolymerisat (A) und/oder das hydrophile gepfropfte selbstvernetzende Polyurethan (B) hydrophile funktionelle Gruppen, insbesondere Carbonsäuregruppen und/oder Carboxylatgruppen, enthalten.

4. Das Verfahren nach Anspruch 3, **dadurch gekennzeichnet, daß** das hydrophile gepfropfte selbstvernetzende Polyurethan (B) Carbonsäuregruppen und/oder Carboxylatgruppen enthält.

5. Das Verfahren nach einem der Ansprüche 1 bis 4, **dadurch gekennzeichnet, daß** als Blockierungsmittel mindestens ein Ketoxim, insbesondere Methylethylketoxim, verwendet wird.

6. Pfropfmischpolymerisat, enthaltend
(A) mindestens ein (Meth)Acrylatcopolymerisat und
(B) mindestens ein Polyurethan,
herstellbar, indem man
(1) mindestens ein hydrophiles oder hydrophobes selbstvernetzendes Polyurethan (B) mit im statistischen Mittel mindestens einer seitenständigen und/oder mindestens einer endständigen olefinisch ungesättigten Gruppe und mindestens einer seitenständigen blockierten Isocyanatgruppe pro Molekül in einem wäßrigen Medium dispergiert, wonach man
(2) eine Mischung aus mindestens einem Monomer (a1) mit mindestens einer isocyanatreaktiven funktionellen Gruppe und mindestens einem hiermit copolymerisierbaren Monomer (a2) in der Gegenwart des Polyurethans (B) oder der Polyurethane (B) in Emulsion radikalisch copolymerisiert.

7. Das Pfropfmischpolymerisat nach Anspruch 6, **dadurch gekennzeichnet, daß** das aufgepfropfte (Meth)Acrylatcopolymerisat (A) und/oder das gepfropfte hydrophile selbstvernetzende Polyurethan (B) hydrophile funktionelle Gruppen, insbesondere Carbonsäuregruppen und/oder Carboxylatgruppen, enthalten.

8. Das Pfropfmischpolymerisat nach Anspruch 7, **dadurch gekennzeichnet, daß** das gepfropfte hydrophile selbstvernetzende Polyurethan (B) Carbonsäuregruppen und/oder Carboxylatgruppen enthält.

9. Das Pfropfmischpolymerisat nach einem der Ansprüche 6 bis 8, **dadurch gekennzeichnet, daß** als Blockierungsmittel mindestens ein Ketoxim, insbesondere Methylethylketoxim, verwendet wird.

10. Die Verwendung der Pfropfmischpolymerisate gemäß einem der Ansprüche 6 bis 9 für die Herstellung von Dichtungsmassen, Klebstoffen und Beschichtungsstoffen.

11. Dichtungsmassen, Klebstoffe und Beschichtungsstoffe, **dadurch gekennzeichnet, daß** sie mindestens eines der Pfropfmischpolymerisate gemäß einem der Ansprüche 6 bis 9 enthalten.

12. Verwendung der Dichtungsmassen, Klebstoffe und Beschichtungsstoffe gemäß Anspruch 11, für die Herstellung von Dichtungen, Klebschichten und dekorativen und/oder schützenden Beschichtungen.

13. Die Beschichtungsstoffe nach Anspruch 11, **dadurch gekennzeichnet, daß** es sich um Wasserbasislacke handelt.

14. Die Verwendung der Beschichtungsstoffe nach Anspruch 13. zur Herstellung von farb- und/oder effektgebenden Mehrschichtlackierungen.

15. Verfahren zur Herstellung farb- und/oder effektgebender Mehrschichtlackierungen auf grundierten oder ungrundierten Substraten, umfassend die folgenden Verfahrensschritte:
(I) Herstellen einer Basislackschicht durch Applikation eines Wasserbasislacks auf
(I.1) das Substrat,
(I.2) eine thermisch gehärtete Füllerlackierung oder
(I.3) eine getrocknete Füllerlackschicht,
(II) Trocknen der Basislackschicht,
(III) Herstellen einer Klarlackschicht durch Applikation eines Klarlacks auf die Basislackschicht und
(IV) gemeinsame Härtung der Basislackschicht (II) und der Klarlackschicht (III) oder der Füllerlackschicht (I.3), der Basislackschicht (II) und der Klarlackschicht (III), wodurch die Basislackierung und die Klarlackierung sowie gegebenenfalls die Füllerlackierung resultieren (Naß-in-naß-Verfahren);
**dadurch gekennzeichnet, daß** man einen Wasserbasislack gemäß Anspruch 13 verwendet.

## Claims

1. Process for producing multicoat colour and/or effect paint systems on primed or unprimed substrates, which comprises the following process steps:
(I) preparing a basecoat film by applying an aqueous basecoat material to
(I.1) the substrate,
(I.2) a thermally cured surfacer coat or
(I.3) a dry surfacer film,
(II) drying the basecoat film,
(III) preparing a clearcoat film by applying a powder slurry clearcoat material to the basecoat film, and
(IV) jointly curing the basecoat film (II) and the clearcoat film (III) or the surfacer film (1.3), the basecoat film (II), and the clearcoat film (III), to give the basecoat and the clearcoat and also, where appropriate, the surfacer coat (wet-on-wet technique);
**characterized in that** an aqueous basecoat material is used which comprises at least one graft copolymer comprising
(A) at least one (meth)acrylate copolymer and
(B) at least one polyurethane
preparable by
(1) dispersing at least one hydrophilic or hydrophobic self-crosslinking polyurethane (B) containing on average per molecule at least one pendant and/or at least one terminal olefinically unsaturated group and at least one blocked isocyanate group in an aqueous medium and then
(2) subjecting a mixture of at least one monomer (a1) containing at least one isocyanate-reactive functional group and at least one monomer (a2) copolymerizable therewith to free-radical copolymerization in emulsion in the presence of the polyurethane (B) or of the polyurethanes (B).

2. Process according to Claim 1, **characterized in that** the hydrophilic or hydrophobic self-crosslinking polyurethane (B) contains at least one terminal and/or at least one pendant blocked isocyanate group.

3. Process according to Claim 1 or 2, **characterized in that** the grafted-on (meth)acrylate copolymer (A) and/or the hydrophilic grafted self-crosslinking polyurethane (B) contain hydrophilic functional groups, especially carboxylic acid groups and/or carboxylate groups.

4. Process according to Claim 3, **characterized in that** the hydrophilic grafted self-crosslinking polyurethane (B) contains carboxylic acid groups and/or carboxylate groups.

5. Process according to one of Claims 1 to 4, **characterized in that** at least one ketoxime, especially methyl ethyl ketoxime, is used as blocking agent.

6. Graft copolymer which comprises
(A) at least one (meth)acrylate copolymer and
(B) at least one polyurethane
and is preparable by
(1) dispersing at least one hydrophilic or hydrophobic self-crosslinking polyurethane (B) containing on average per molecule at least one pendant and/or at least one terminal olefinically unsaturated group and at least one pendant blocked isocyanate group in an aqueous medium and then
(2) subjecting a mixture of at least one monomer (a1) containing at least one isocyanate-reactive functional group and at least one monomer (a2) copolymerizable therewith to free-radical copolymerization in emulsion in the presence of the polyurethane (B) or of the polyurethanes (B).

7. Graft copolymer according to Claim 6, **characterized in that** the grafted-on (meth)acrylate copolymer (A) and/or the grafted hydrophilic self-crosslinking polyurethane (B) contain hydrophilic functional groups, especially carboxylic acid groups and/or carboxylate groups.

8. Graft copolymer according to Claim 7, **characterized in that** the grafted hydrophilic self-crosslinking polyurethane (B) contains carboxylic acid groups and/or carboxylate groups.

9. Graft copolymer according to one of Claims 6 to 8, **characterized in that** at least one ketoxime, especially methyl ethyl ketoxime, is used as blocking agent.

10. Use of the graft copolymers according to one of Claims 6 to 9 for preparing sealing compounds, adhesives, and coating materials.

11. Sealing compounds, adhesives, and coating materials, **characterized in that** they comprise at least one of the graft copolymers according to one of Claims 6 to 9.

12. Use of the sealing compounds, adhesives, and coating materials according to Claim 11 for producing seals, adhesive films, and decorative and/or protective coatings.

13. Coating materials according to Claim 11, **characterized in that** they are aqueous basecoat materials.

14. Use of the coating materials according to Claim 13 for producing multicoat colour and/or effect paint systems.

15. Process for producing multicoat colour and/or effect paint systems on primed or unprimed substrates, which comprises the following process steps :
(I) preparing a basecoat film by applying an aqueous basecoat material to
(I.1) the substrate,
(I.2) a thermally cured surfacer coat or
(I.3) a dry surfacer film,
(II) drying the basecoat film,
(III) preparing a clearcoat film by applying a clearcoat material to the basecoat film, and
(IV) jointly curing the basecoat film (II) and the clearcoat film (III) or the surfacer film (I.3), the basecoat film (II), and the clearcoat film (III), to give the basecoat and the clearcoat and also, where appropriate, the surfacer coat (wet-on-wet technique);
**characterized in that** an aqueous basecoat material according to Claim 13 is used.

## Revendications

1. Procédé de préparation de vernissages multicouches colorés et/ou produisant un effet sur des substrats revêtus ou non d'une couche de fond, comprenant les étapes suivantes :
(I) une préparation d'une couche de vernis de base par application d'un vernis de base à l'eau sur
(I.1) le substrat,
(I.2) un vernissage de remplissage durci thermiquement, ou
(I.3) une couche de vernis de remplissage séchée,
(II) un séchage de la couche de vernis de base,
(III) une préparation d'une couche de vernis transparent par application d'un vernis transparent à base de suspension de poudre sur la couche de vernis de base, et
(IV) un durcissage commun de la couche de vernis de base (II) et de la couche de vernis transparent (III) ou de la couche de vernis de remplissage (1.3), de la couche de vernis de base (II) et de la couche de vernis transparent (III), d'où résultent le vernissage de base et le vernissage transparent ainsi qu'éventuellement le vernissage de remplissage (procédé mouillé-sur-mouillé),
**caractérisé en ce qu'**on utilise un vernis de base à l'eau qui contient au moins un copolymère greffé, comportant
(A) au moins un copolymère (méth)acrylique, et
(B) au moins un polyuréthanne,
préparable
(1) en dispersant dans un milieu aqueux au moins un polyuréthanne (B) autoréticulant hydrophile ou hydrophobe comportant en moyenne statistique, par molécule au moins un groupe oléfiniquement insaturé en position terminale et/ou au moins un groupe oléfiniquement insaturé en position latérale et au moins un groupe isocyanate bloqué, après quoi
(2) on copolymérise par voie radicalaire en émulsion un mélange d'au moins un monomère (a1) comportant au moins un groupe fonctionnel réactif vis-à-vis des isocyanates et d'au moins un monomère (a2) copolymérisable avec celui-ci, en présence du polyuréthanne (B) ou des polyuréthannes (B).

2. Procédé suivant la revendication 1, **caractérisé en ce que** le polyuréthanne (B) autoréticulant hydrophile ou hydrophobe contient au moins un groupe isocyanate bloqué en position terminale et/ou au moins un groupe isocyanate bloqué en position latérale.

3. Procédé suivant la revendication 1 ou 2, **caractérisé en ce que** le copolymère (méth)acrylique greffé (A) et/ou le polyuréthanne (B) autoréticulant greffé hydrophile contiennent des groupes fonctionnels hydrophiles, en particulier des groupes acide carboxylique et/ou des groupes carboxylate.

4. Procédé suivant la revendication 3, **caractérisé en ce que** le polyuréthanne (B) autoréticulant greffé hydrophile contient des groupes acide carboxylique et/ou des groupes carboxylate.

5. Procédé suivant l'une des revendications 1 à 4, **caractérisé en ce que**, comme agent de blocage, on utilise au moins une cétoxime, en particulier une méthyléthylcétoxime.

6. Copolymère greffé, contenant
(A) au moins un copolymère (méth)acrylique et
(B) au moins un polyuréthanne,
préparable
(1) en dispersant dans un milieu aqueux au moins un polyuréthanne (B) autoréticulant hydrophile ou hydrophobe comportant en moyenne statistique, par molécule au moins un groupe oléfiniquement insaturé en position terminale et/ou au moins un groupe oléfiniquement insaturé en position latérale et au moins un groupe isocyanate bloqué en position latérale, après quoi
(2) on copolymérise par voie radicalaire en émulsion un mélange d'au moins un monomère (a1) comportant au moins un groupe fonctionnel réactif vis-à-vis des isocyanates et d'au moins un monomère copolymérisable avec celui-ci (a2) en présence du polyuréthanne (B) ou des polyuréthannes (B).

7. Copolymère greffé suivant la revendication 6, **caractérisé en ce que** le copolymère (méth)acrylique greffé (A) et/ou le polyuréthanne (B) autoréticulant hydrophile greffé contiennent des groupes fonctionnels hydrophiles, en particulier des groupes acide carboxylique et/ou des groupes carboxylate.

8. Copolymère greffé suivant la revendication 7, **caractérisé en ce que** le polyuréthanne (B) autoréticulant hydrophile greffé contient des groupes acide carboxylique et/ou des groupes carboxylate.

9. Copolymère greffé suivant l'une des revendications 6 à 8, **caractérisé en ce que**, comme agent de blocage, on utilise au moins une cétoxime, en particulier une méthyléthylcétoxime.

10. Utilisation des copolymères greffés suivant l'une des revendications 6 à 9, pour la préparation de masses d'étanchéification, de matières adhésives et de matières de revêtement.

11. Masses d'étanchéification, matières adhésives et matières de revêtement, **caractérisées en ce qu'**elles contiennent au moins un des copolymères greffés suivant l'une des revendications 6 à 9.

12. Utilisation des masses d'étanchéification, des matières adhésives et des matières de revêtement suivant la revendication 11, pour la fabrication d'éléments d'étanchéité, de couches adhésives et de revêtements décoratifs et/ou protecteurs.

13. Matières de revêtement suivant la revendication 11, **caractérisées en ce qu'**il s'agit de vernis de base à l'eau.

14. Utilisation des matières de revêtement suivant la revendication 13, pour la préparation de vernissages multicouches colorés et/ou produisant un effet.

15. Procédé de préparation de vernissages multicouches colorés et/ou produisant un effet sur des substrats revêtus ou non d'une couche de fond, comprenant les étapes suivantes :
(I) une préparation d'une couche de vernis de base par application d'un vernis de base à l'eau sur
(I.1) le substrat,
(I.2) un vernissage de remplissage durci par voie thermique, ou
(I.3) une couche de vernis de remplissage séchée,
(II) un séchage de la couche de vernis de base,
(III) une préparation d'une couche de vernis transparent par application d'un vernis transparent sur la couche de vernis de base, et
(IV) un durcissage commun de la couche de vernis de base (II) et de la couche de vernis transparent (III) ou de la couche de vernis de remplissage (I.3), de la couche de vernis de base (II) et de la couche de vernis transparent (III), d'où résultent le vernissage de base et le vernissage transparent ainsi qu'éventuellement le vernissage de remplissage (procédé mouillé-sur-mouillé),
**caractérisé en ce qu'**on utilise un vernis de base à l'eau suivant la revendication 13.
